(19) Europäisches Patentamt
European Patent Office
Office européen des brevets

(11)  **EP 4 311 986 B1**

(12)  **EUROPEAN PATENT SPECIFICATION**

(45) Date of publication and mention
of the grant of the patent:
**19.02.2025  Bulletin 2025/08**

(21) Application number: **23178782.1**

(22) Date of filing: **12.06.2023**

(51) International Patent Classification (IPC):
**F24S 30/425** (2018.01)       **H02S 20/32** (2014.01)

(52) Cooperative Patent Classification (CPC):
**F24S 30/425; H02S 20/32;** F16D 3/185;
F16D 3/224; F16D 3/40; F24S 2025/019;
F24S 2030/12; F24S 2030/134; F24S 2030/136;
F24S 2030/15

(54) **REDUCTION GEARBOX, SYSTEM FOR PRODUCING ELECTRICITY COMPRISING SAID REDUCTION GEARBOX AND PROCESS FOR INSTALLING SAID SYSTEM**

UNTERSETZUNGSGETRIEBE, SYSTEM ZUR STROMERZEUGUNG, DAS DAS UNTERSETZUNGSGETRIEBE UMFASST, UND VERFAHREN ZUR INSTALLATION DES SYSTEMS

RÉDUCTEUR, SYSTÈME DE PRODUCTION D'ÉLECTRICITÉ COMPRENANT LEDIT RÉDUCTEUR ET PROCÉDÉ D'INSTALLATION DUDIT SYSTÈME

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **28.07.2022  IT 202200016062**

(43) Date of publication of application:
**31.01.2024  Bulletin 2024/05**

(73) Proprietor: **SOLTIGUA S.R.L.**
**47035 Gambettola (FC) (IT)**

(72) Inventors:
• **ORIOLI, Vittorio**
**47521 Cesena (FC) (IT)**

• **VINCENZI, Sara**
**47043 Gatteo (FC) (IT)**
• **TOMASINI, Federico**
**47035 Gambettola (FC) (IT)**

(74) Representative: **Bonatto, Marco et al**
**Barzanò & Zanardo S.p.A.**
**Via Borgonuovo, 10**
**20121 Milano (IT)**

(56) References cited:
WO-A1-2013/170718       DE-U1- 202016 103 981
US-A1- 2013 056 000     US-A1- 2020 052 644
US-A1- 2021 194 416

**Description**

**Field of the invention**

The present invention relates to a reduction gearbox particularly suitable for being set in solar trackers, preferably photovoltaic trackers, which are in turn set on relatively undulating or otherwise non-flat ground.

The invention also relates to a solar tracker system provided with such a reduction gearbox and a process for installing such a system.

**State of the art**

Systems for producing electricity comprising one or more solar trackers are currently known.

Each solar tracker of the so-called single-axis type is provided with a plurality of photovoltaic panels mounted in a row on one or more orienting crossbars that extend substantially parallel to the ground.

These orienting crossbars may be simple metal profiles or other bars -for example, hollow- or metal beams, up to several tens of metres long, and may be rotated on themselves in order to vary the inclination of the photovoltaic panels relative to the sun and maximise the amount of solar radiation they capture and transform into electricity.

Photovoltaic panels generally have a rectangular shape.

Panels are preferably mounted in a row on the respective crossbar with their long side perpendicular to the crossbar itself, i.e. in the so-called "vertical" or "portrait" mounting mode; in some types of trackers, called "1-vertical" or "1-portrait", only one row of panels is mounted on each crossbar; in other types of machines, called "2-vertical" or "2-portrait" trackers, two rows of panels are installed.

In still other types of systems, currently called "horizontal" or "landscape", one or more rows of panels are mounted on the crossbar with the long side parallel to the crossbar.

In some solutions, two or more parallel rows of solar trackers are transversally connected by a transmission, so that both rows are driven by a same motor.

Solar trackers are more cost-effective when they support a relatively large number of photovoltaic panels; consequently they have considerable lengths, exceeding, in some cases, **100** m.

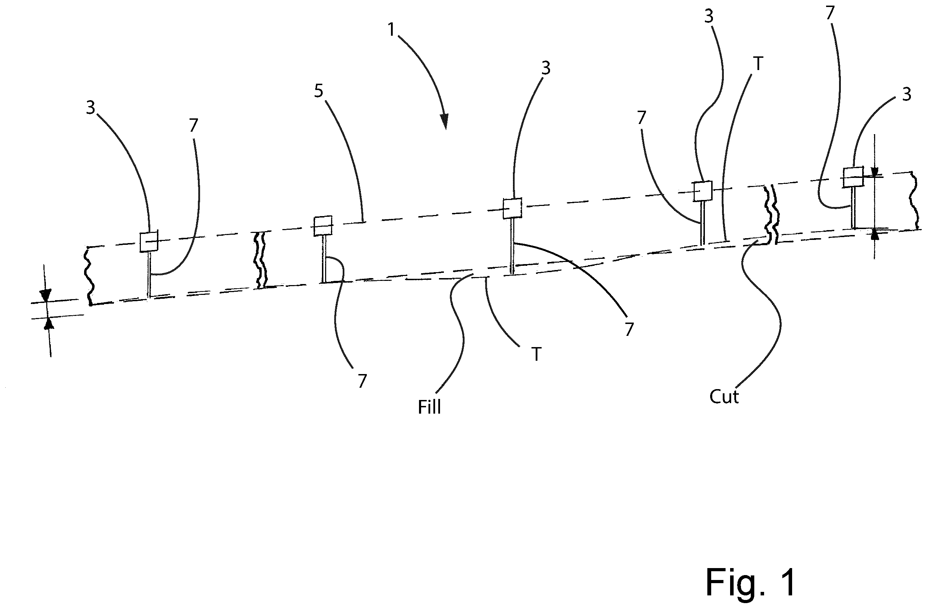

Each large size tracker currently comprises a plurality of vertical uprights **7** -often made as posts-fitted into the ground at appropriate distances from each other and supporting the orienting crossbars at several points along their span (Figures **1-3).**

Each orienting crossbar is mounted on the uprights by means of rotating bearings that allow the crossbar to rotate on itself.

In some embodiments, each orienting crossbar is driven by a reduction gearbox fixed to one or both ends of the crossbar.

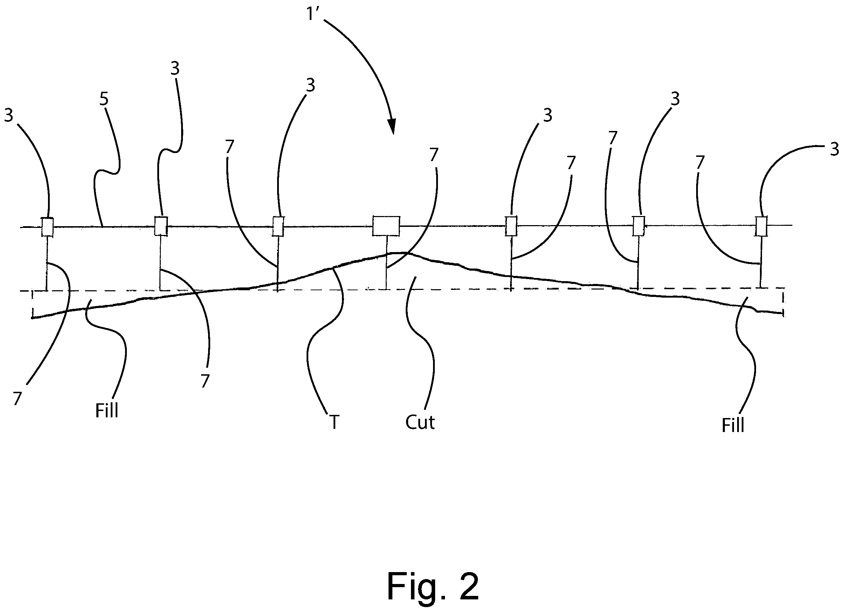

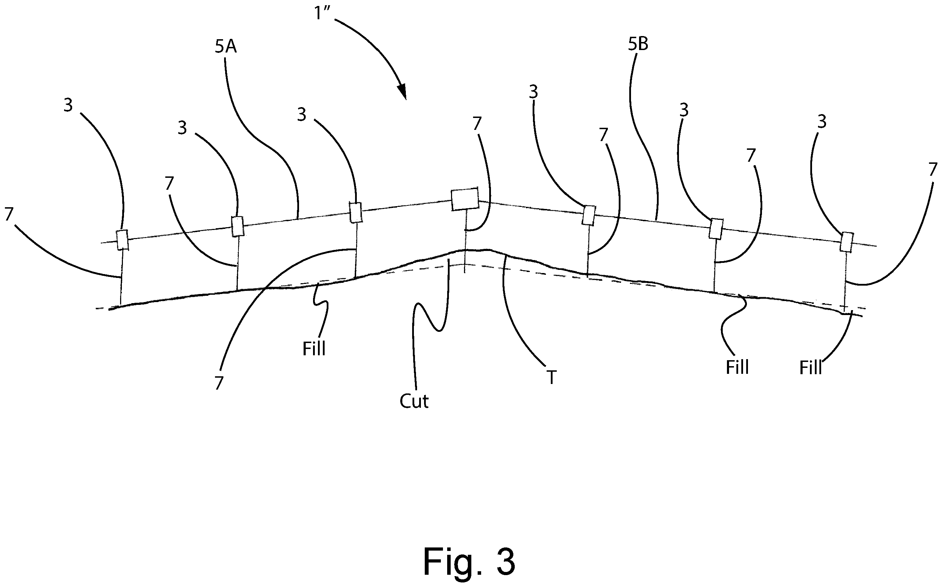

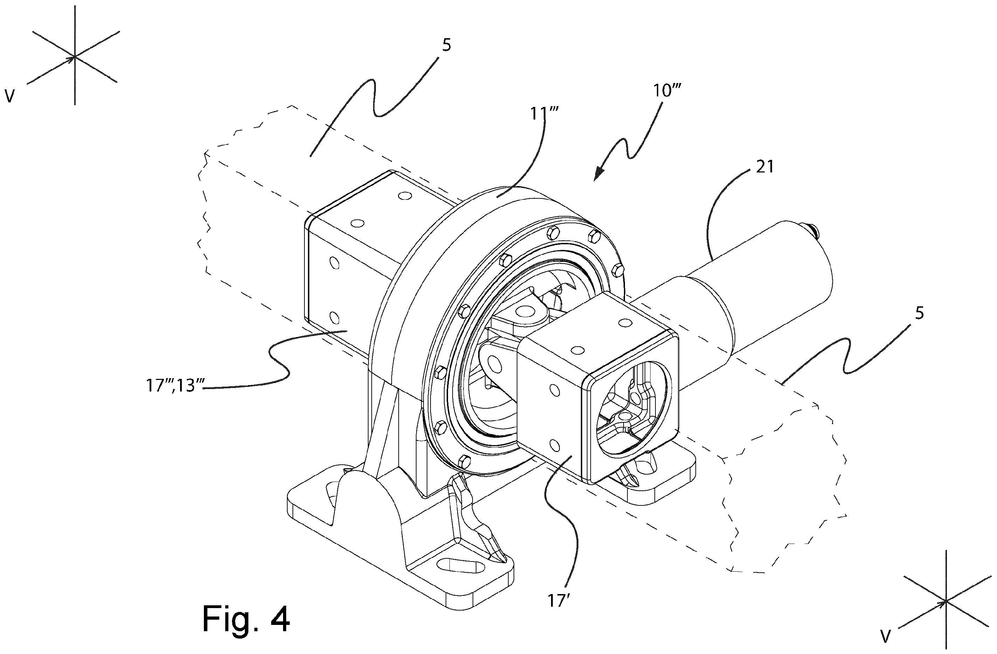

Known examples of this type of reduction gearbox are shown for example in Figures **3, 4** of the utility model ES1274495U and in Figures **2-6** of the utility model ES1271451U**.**

Currently, the orienting crossbars are mounted with an inclination relative to the ground no greater than **30%,** corresponding to approximately **17°** sexagesimal.

In the current solar trackers, the orienting crossbars placed on opposite sides of the reduction gearboxes are in fact coaxial, as the reduction gearbox has a cylindrical coupling that does not provide for any adjustment.

Such trackers therefore hardly adapt to non-flat grounds, unless corrective actions are taken that are all the more relevant the longer the tracker is.

This drawback is emphasized by the scarcity of available land for large-scale photovoltaic installations at least in Italy, by the current competition between photovoltaic energy production and agriculture: although techniques for combining agricultural and photovoltaic energy production on the same ground have long been known, they are currently not yet widespread.

Figures **1-3** actually show the solutions predominantly used today to install large size solar trackers on uneven ground.

According to a first solution currently practised, the solar tracker **1** of Figure **1** comprises a plurality of solar panels, not shown, fixed to a single orienting crossbar **5,** which is kept substantially straight and parallel to the mean line of the ground **T,** slightly inclined and undulating, by varying the length of the part of the posts -i.e. uprights- **7** protruding out of the ground.

The orienting crossbar **5** is fixed to and rests on the top of the posts **7** by means of bearings **3.**

This solution is only effective with relatively small undulations and irregularities in the ground profile below a same tracker, in relation to the average slope line of the ground itself, up to **1-2** metres; noticeable irregularities require some posts to be lengthened considerably and their cross-section increased and strengthened so that they can withstand a bending moment at the base of the post that increases proportionally to the difference in height.

In the case of significant elevation changes in the ground beneath the structure, this first solution soon becomes expensive and complicated to manage.

In a second solution currently practised, the ground surface **T** is made more even and flat by means of so-called *cut/fill* earth-moving works with which the ground is removed in some areas and taken into other areas (Figure **2);** this solution is always technically feasible but very expensive and takes longer to implement.

In a third solution currently practised, solar trackers are made shorter so that they can better follow the pre-existing profile of the ground, reducing civil engineering works and related costs.

However, shorter trackers have higher specific costs.

In order to limit the latter, some known systems share a single electronics or handling system between several short trackers.

In a fourth solution currently practised, the solar trackers **1"** comprise several orienting crossbars **5**A, **5**B that are not coaxial with each other, which overall make up a broken line (Figure **3).**

In this solution, a bearing is mounted on each post **7,** which allows the connection of two orienting crossbars **5**A, **5**B inclined to each other, thus better adapting the solar tracker to the existing ground, reducing the *cut/fill* costs.

However, since at each change of slope it is necessary to leave a space between two adjacent photovoltaic panels larger than the axial footprint of the bearing located at that point, i.e. at each coupling point of the orienting crossbars 5A, 5B, the tracker is significantly longer for the same number of panels installed thereon, thus increasing the gross surface area occupied.

For the same installed electrical power, this solution therefore requires a larger plot of land, increasing the investment costs of the system.

It is also clear that installation costs according to the latter solution also increase very quickly as the unevenness of the ground increases.

The German Utility model DE202016103981U discloses a supporting device for rotatably mounting a plurality of solar modules; this supporting device comprises a transmission **2,** an input shaft **19** and two rotary joints **32;** the input shaft **19** is configured for driving the transmission **2** and the two rotary joints **32** are configured for driving and rotating two inclination shafts **3** even when said shafts **3** are not coaxial one to another.

This known supporting device allows setting photovoltaic plants also on uneven grounds or floors.

An object of the present invention is to obviate the above-mentioned drawbacks of the prior art and in particular to provide even large size solar trackers that can also be conveniently installed on uneven and/or undulating ground, with lower costs for earth-moving works or for compensating for unevenness of the ground by varying the above-ground length of the posts **7,** or with lower costs than trackers with shorter structures, while reducing the unused surface area because occupied by spaces between the photovoltaic panels.

### Summary of the invention

Such object is achieved, according to the present invention, by a reduction gearbox having the features according to claim **1.**

According to a particular embodiment of the invention, the reduction comprises at least two take-off joints (**19, 19**', **19"**).

In a second aspect of the invention, this object is achieved by a system for producing electricity having the features according to claim **12.**

In a third aspect of the invention, this object is achieved by a process for installing a system for producing electricity having the features according to claim **13.**

Further features of the invention are the subject matter of the dependent claims.

The advantages attainable with the present invention shall become more readily apparent, to the person skilled in the art, by the following detailed description of a particular, non-limiting example of embodiment, illustrated with reference to the following schematic figures.

### List of Figures

Figure **1** shows an elevation view of a first known solution for installing a solar tracker of a significant length on uneven ground;

Figure **2** shows an elevation view of a second known solution for installing a solar tracker of a significant length on uneven ground, with substantial *cut/fill* earth-moving works;

Figure **3** shows an elevation view of a fourth solution for installing a solar tracker of a significant length on uneven ground, with less *cut/fill* earth-moving works than the solution in Figure **2;**

Figure **4** shows a perspective view of a reduction gearbox according to a first particular embodiment of the present invention;

Figure **5** shows a section, according to the section plane V-V, of the reduction gearbox in Figure **4;**

Figure **5A** shows a simplified section, according to the crown contact plane **PCCor,** of the toothed crown element of the reduction gearbox in Figure **4,** Figure **6,** Figure **8,** Figure **10,** Figure **13,** Figure **16;**

Figure **6** shows a perspective view of a reduction gearbox according to a second particular embodiment of the present invention;

Figure **7** shows a section, according to the section plane VII-VII, of the reduction gearbox in Figure **7;**

Figure **8** shows a perspective view of a reduction gearbox according to a third particular embodiment of the present invention;

Figure **9** shows a section, according to section plane IX-IX, of the reduction gearbox in Figure **8;**

Figure **10** shows a perspective view of a reduction gearbox according to a fourth particular embodiment of the present invention;

Figure **11** shows a section, according to the section plane XI-XI, of the reduction gearbox in Figure **4;**

Figure **12** shows an exploded perspective view of the reduction gearbox in Figure **10;**

Figure **13** shows a perspective view of a reduction gearbox according to a fifth particular embodiment of the present invention;

Figure **14** shows a section, according to the section plane X$^{IV}$-X$^{IV}$, of the reduction gearbox in Figure **13;**

Figure **14A** shows a section, according to the section plane X$^{IV}$-X$^{IV}$, of the toothed crown element of the reduction gearbox in Figure **13;**

Figure **15** shows an exploded perspective view of the reduction gearbox in Figure **13;**

Figure **16** shows a perspective view of a reduction gearbox according to a sixth particular embodiment of the present invention;

Figure **17** shows a section, according to the section plane XVII-XVII, of the reduction gearbox in Figure **16;**

Figure **17A** shows a section, according to the section plane XVII-XVII, of the toothed crown element of the reduction gearbox in Figure **16;**

Figure **18** shows an exploded perspective view of the reduction gearbox in Figure **16;**

Figure **19** shows a perspective view of a solar tracker according to a seventh particular embodiment of the present invention;

Figure **20** shows an elevation view of the system in Figure **19;**

Figure **21** shows a perspective view of a solar tracker system according to an eighth particular embodiment of the present invention;

Figure **22** shows an elevation view of the system in Figure **21;**

Figure **23** shows an elevation view of a portion of a solar tracker system according to a ninth particular embodiment of the present invention;

Figure **24** shows a perspective view of the system in Figure **23.**

## Detailed description

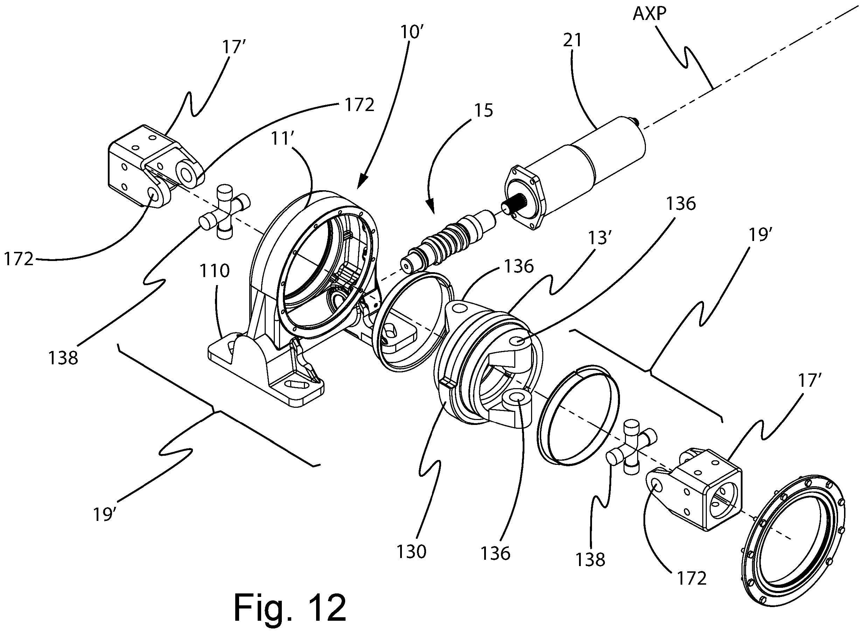

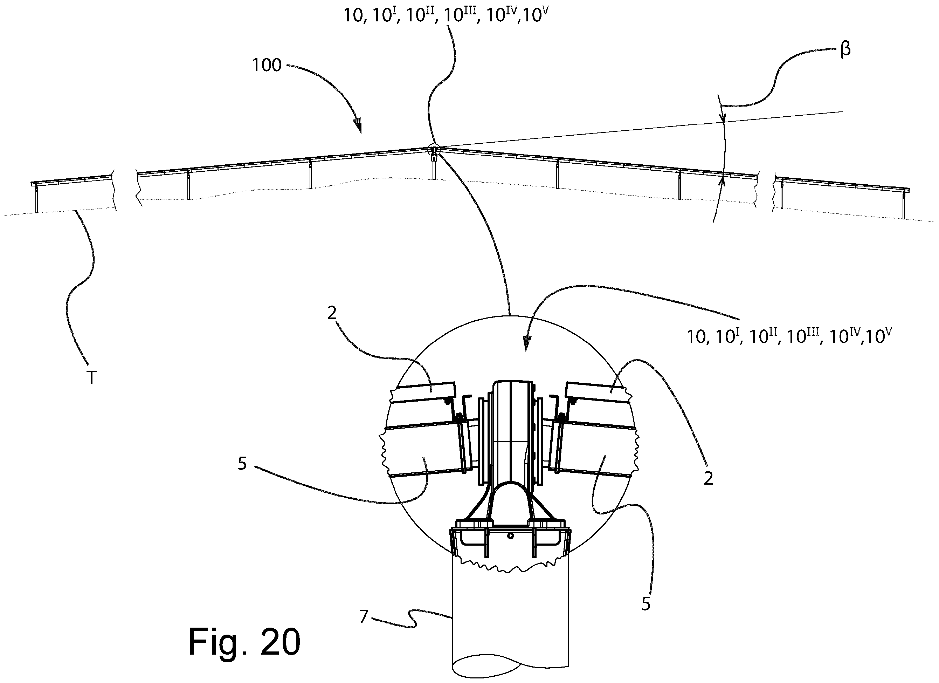

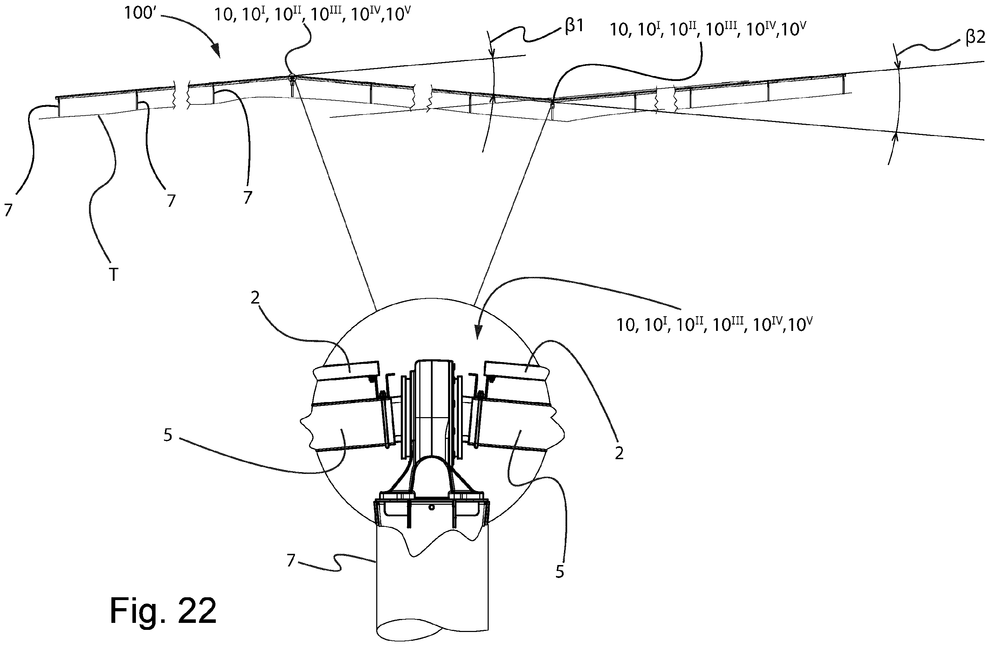

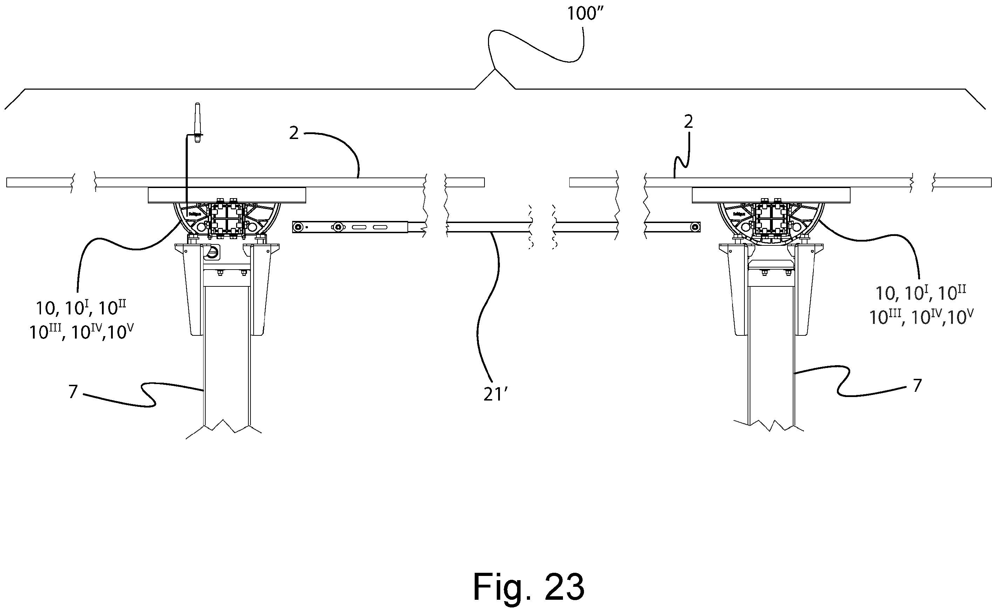

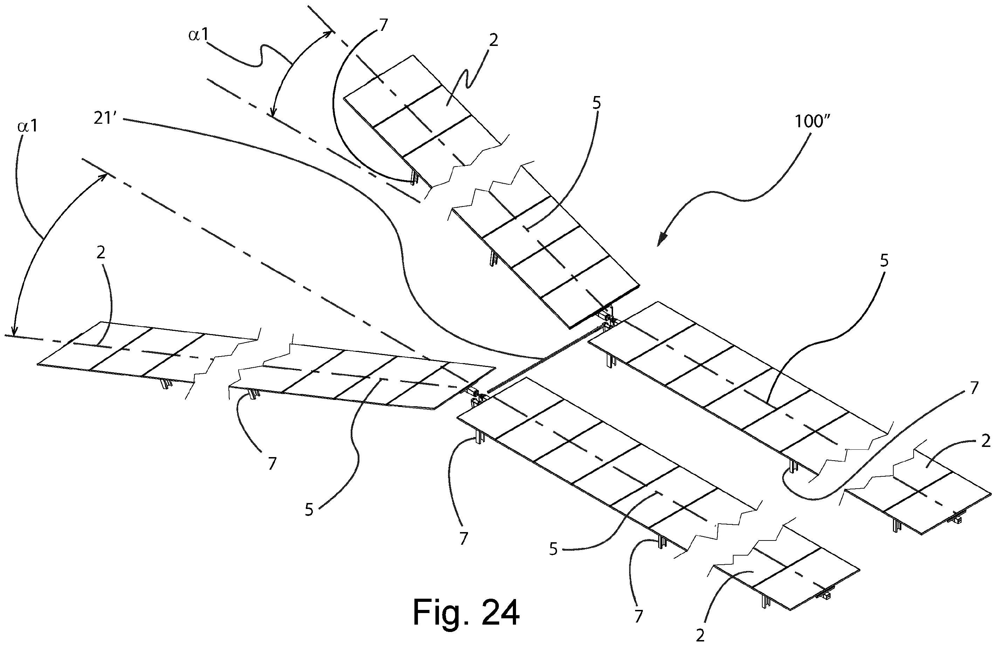

Figures **4-24** relate to a reduction gearbox and an associated solar tracker according to different particular embodiments of the present invention.

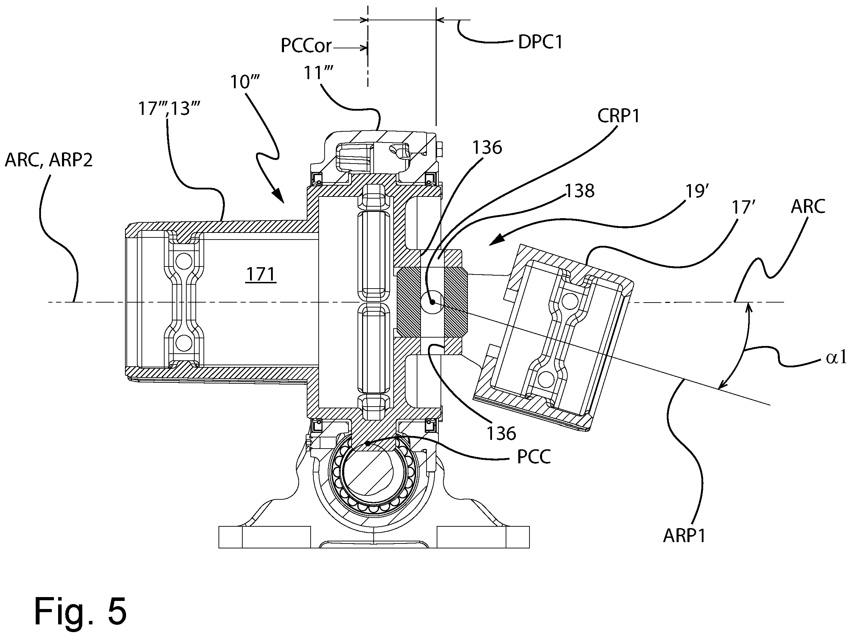

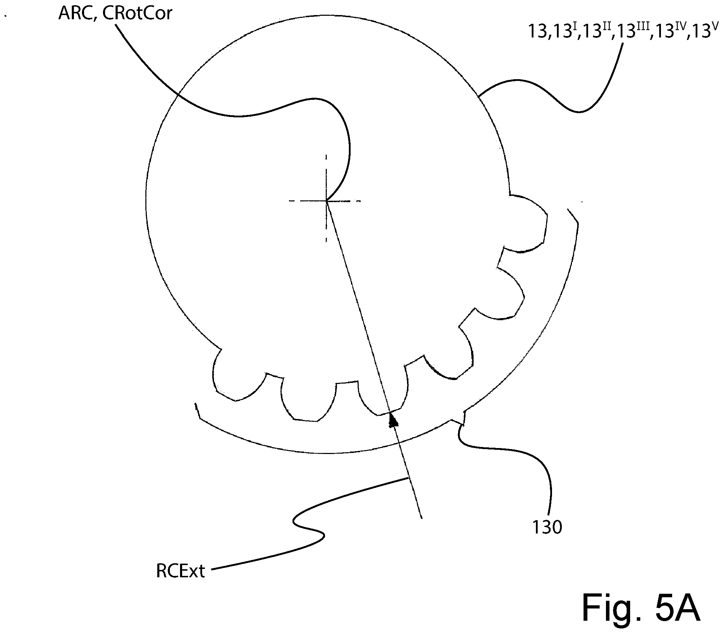

The reduction gearbox of the embodiment in Figures **4, 5** is globally referred to as **10$^{III}$.**

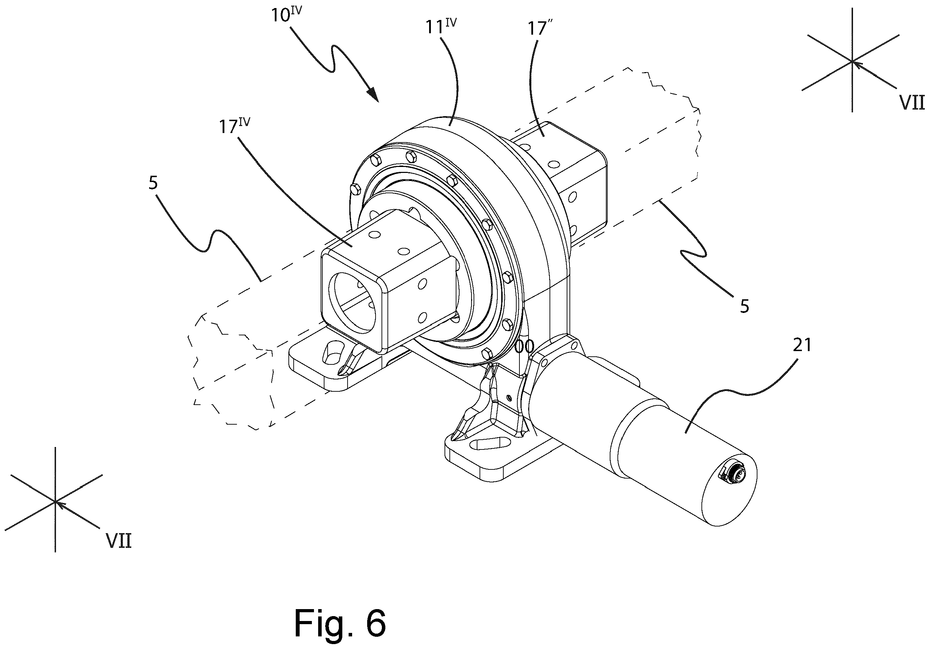

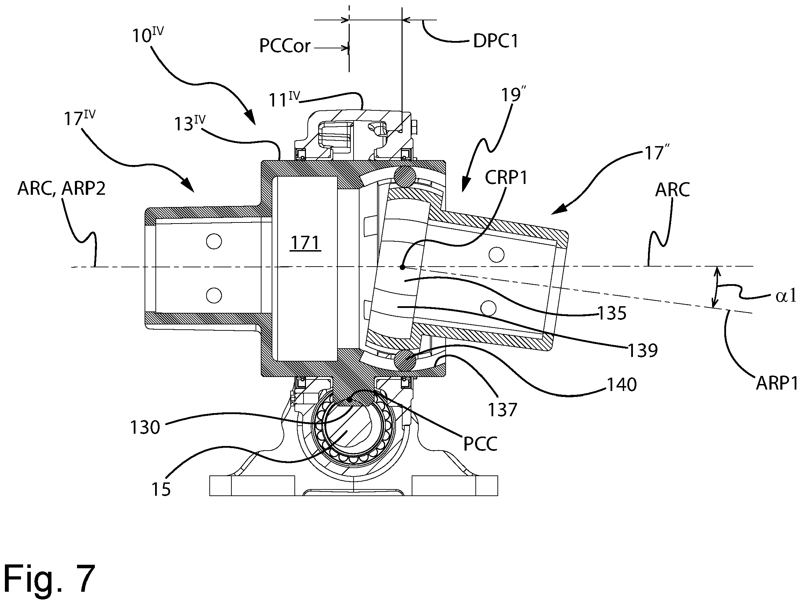

The reduction gearbox of the embodiment in Figures **6, 7** is globally referred to as **10$^{IV}$.**

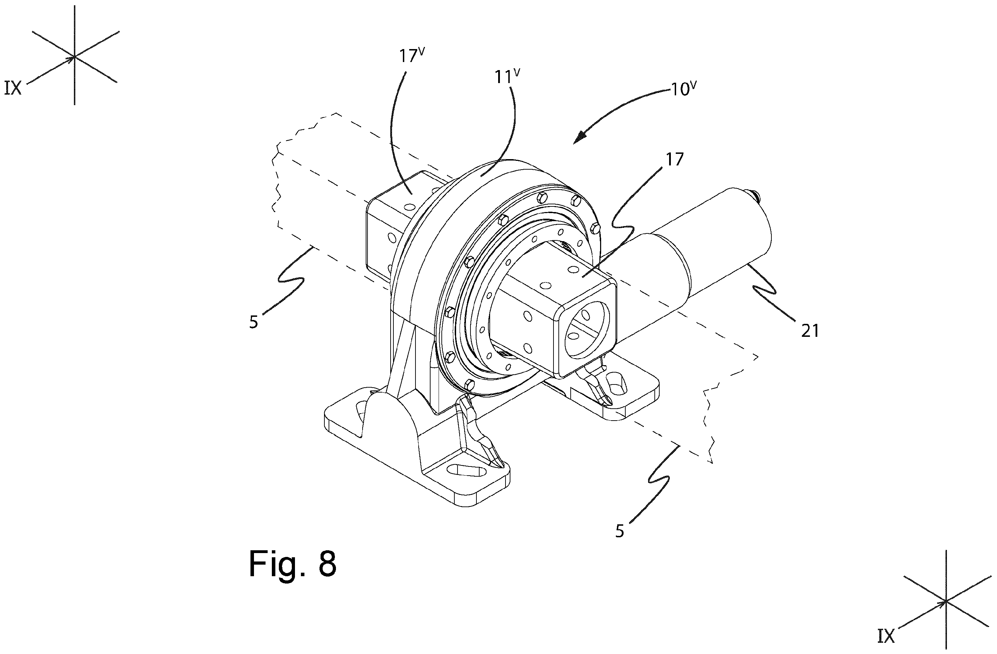

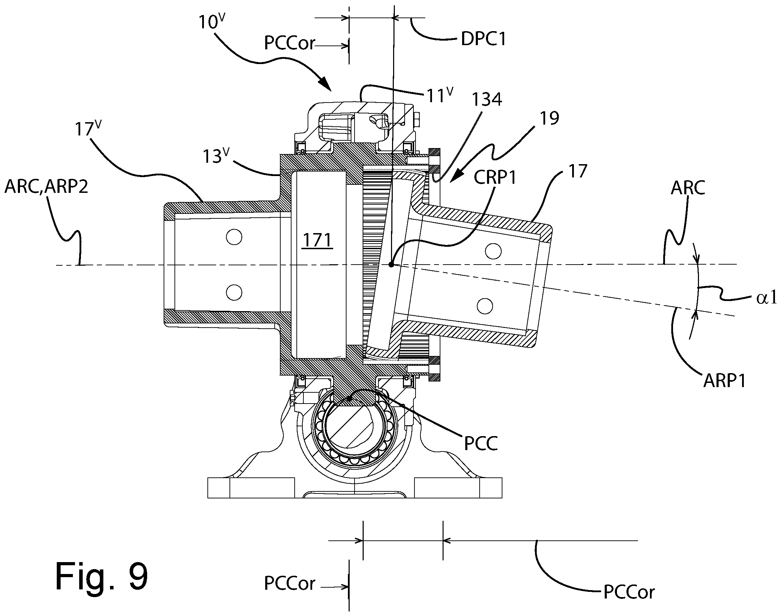

The reduction gearbox of the embodiment in Figures **8, 9** is globally referred to as **10$^{V}$.**

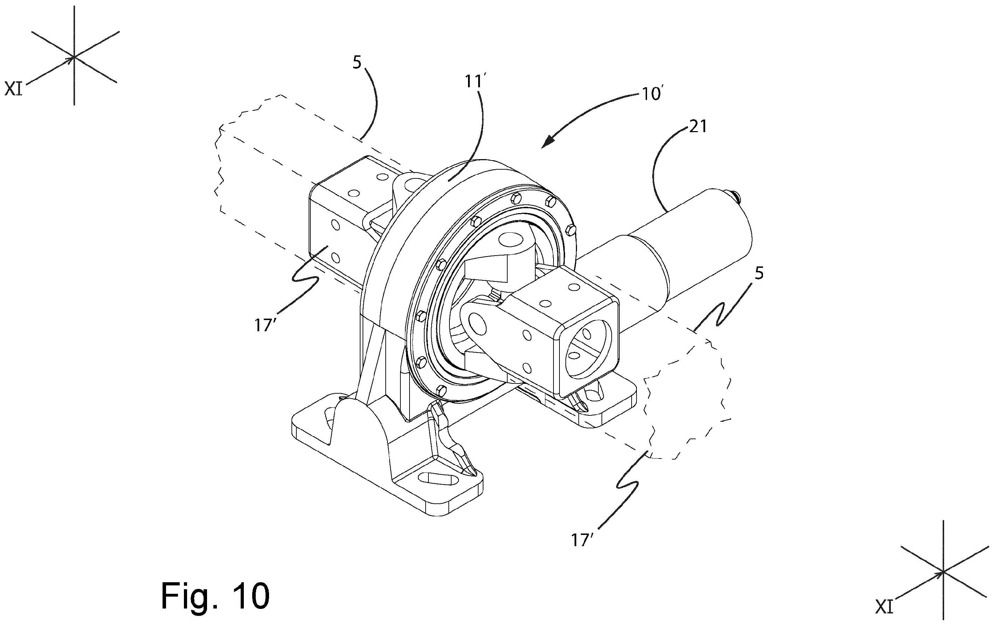

The reduction gearbox of the embodiment in Figures **10, 11, 12** is globally referred to as **10'.**

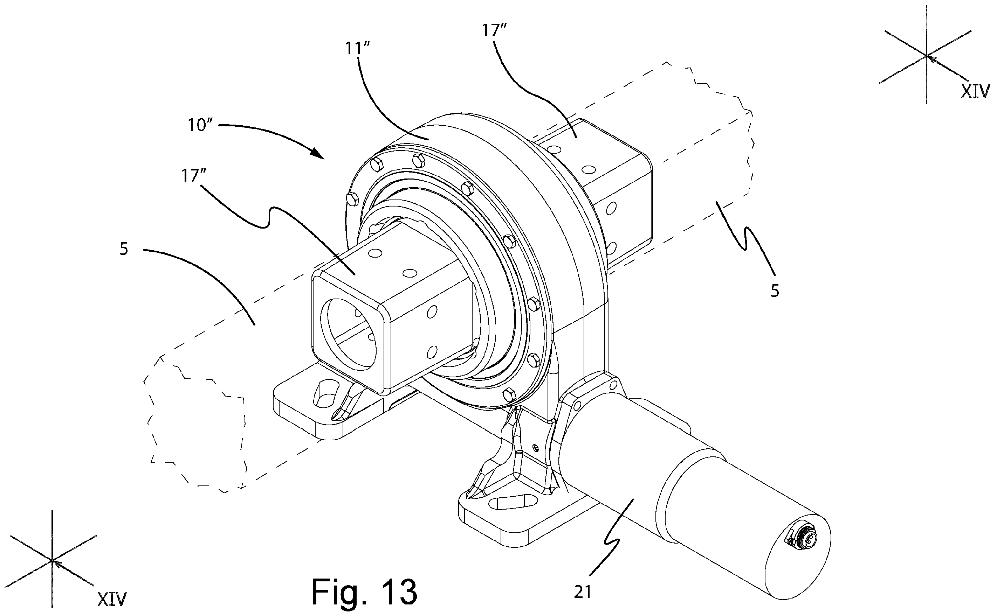

The reduction gearbox of the embodiment in Figures **13, 14, 15** is globally referred to as **10".**

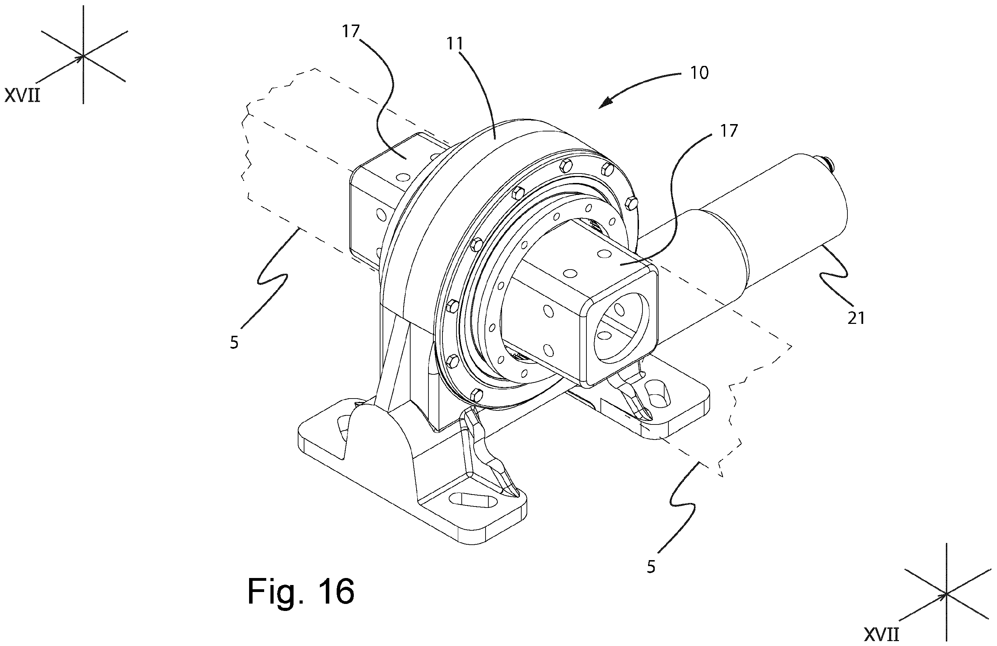

The reduction gearbox of the embodiment in Figures **16, 17, 18** is globally referred to as **10.**

According to an aspect of the invention, the reduction gearbox **10, 10', 10", 10$^{III}$, 10$^{IV}$, 10$^{V}$** comprises a housing **11, 11', 11", 11$^{III}$, 11$^{IV}$, 11$^{V}$,** a toothed crown element **13, 13', 13", 13$^{III}$, 13$^{IV}$, 13$^{V}$,** a power input **15,** at least two power take-offs **17, 17', 17',17$^{III}$, 17$^{IV}$, 17$^{V}$** at least one take-off joint **19, 19', 19"** (Figure **5, 7, 9, 11, 14, 17).**

The toothed crown element **13, 13', 13", 13$^{III}$, 13$^{IV}$, 13$^{V}$** may have a substantially and overall tubular shape, and preferably forms a through cavity **171** (Figure **5, 7, 9, 11, 14A, 17A,).**

The toothed crown element **13, 13', 13", 13$^{III}$, 13$^{IV}$, 13$^{V}$** forms a toothing, such as an arc of toothing **130** (Figure **5, 7, 9, 11, 14, 17).**

The housing **11, 11', 11", 11$^{III}$, 11$^{IV}$, 11$^{V}$** may comprise a casing -for example of a substantially tubular (Figure **6, 9, 12)** or annular shape- extending around and/or containing at least part of the toothed crown element **13, 13', 13", 13$^{III}$, 13$^{IV}$, 13$^{V}$** and/or at least part of the two power take-offs **17, 17', 17"** (Figure **5, 7, 9, 11, 14, 17).**

The housing **11, 11', 11", 11$^{III}$, 11$^{IV}$, 11$^{V}$** may form one or more fixing feet **110** or other fixing brackets by means of which the housing can be fixed e.g. at the top of an upright or post **7** or other support.

The power input **15** is configured for driving the toothed crown element **13, 13', 13", 13$^{III}$, 13$^{IV}$, 13$^{V}$** and may comprise, for example, a drive shaft on which a screw of a worm screw is preferably cut, or a pinion, spool or other toothed wheel, preferably with external toothing, or even a part of a clutch.

The power input **15** and the toothed crown element **13, 13', 13", 13$^{III}$, 13$^{IV}$, 13$^{V}$** together form a speed reduction sub-assembly that reduces the rotation speed of the toothed crown element **13, 13', 13", 13$^{III}$, 13$^{IV}$, 13$^{V}$** relative to the rotation speed of the shaft or other element belonging to the power input **15**.

The ratio between the rotation speed of the shaft or other element belonging to the power input **15** and the rotation speed of the toothed crown element **13, 13', 13", 13$^{III}$, 13$^{IV}$, 13$^{V}$** is preferably between **20-800** times, or between **40** and **80** times, as for example in the case of applications with only one reduction step, or between **200** and **600** as for example in the case of applications with two reduction steps, in particular with two worm screw cascade systems.

The toothed crown element **13, 13', 13", 13$^{III}$, 13$^{IV}$, 13$^{V}$** is configured for driving both power take-offs **17, 17', 17", 17$^{III}$, 17$^{IV}$, 17$^{V}$** by rotating on itself around a crown rotation axis **ARC.**

Each power take-off **17, 17', 17"** comprises a rotating interface configured for rotating on itself about a respective take-off rotation axis **ARP1, ARP2** (Figure **5, 7, 9, 11, 14, 17**).

The take-off rotation axes **ARP1, ARP2** are preferably parallel or in any case longitudinal to the orienting crossbar 5 driven by the respective power take-off **17, 17', 17".**

Such an interface is an element configured for fixing to or otherwise engaging with an orienting crossbar **5** or other driven rotating member so as to drive it into rotation, and may be for example a prismatic or parallelepiped- or cylinder-shaped protrusion or recess, or a flange or other male or female coupling element or other component of a joint, section or other portion of a rotating shaft.

The power input **15** is configured for engaging with the toothing **130** of the toothed crown element **13, 13', 13", 13$^{III}$, 13$^{IV}$, 13$^{V}$** coming into contact therewith in at least one crown contact point **PCC** (Figure **5, 7, 9, 11, 14, 17**).

The reduction gearbox **10, 10', 10"** comprises at least one take-off joint **19, 19', 19",** and optionally two or even more take-off joints 19, 19', 19", each of which is configured for driving, by rotation, a respective power take-off **17, 17', 17",** wherein the two power take-offs **17, 17', 17"** extend from and/or protrude from two sides, substantially opposite to each other (Figure **4-18)** or otherwise substantially different from each other, of the reduction gearbox **10, 10', 10", 10$^{III}$, 10$^{IV}$, 10$^{V}$.**

Advantageously, each take-off joint **19, 19', 19"** comprises part of the toothed crown element **13, 13', 13", 13$^{III}$, 13$^{IV}$, 13$^{V}$** and a respective power take-off **17, 17', 17"** (Figure **4-18).**

Each take-off joint **19, 19', 19"** allows for varying the orientation in space of the rotation axis of the respective power take-off **17, 17',17",** referred to as **ARP1, ARP2,** by rotating it relative to the toothed crown element **13, 13', 13", 13$^{III}$, 13$^{IV}$, 13$^{V}$** about a respective take-off rotation centre **CRP1, CRP2;** such rotation centres can, for example, coincide with the centre of the cross element **138,** with the centre of the toothing **170** or with the centre of the spherical surface, if any, of which the head **135** is a part.

Each take-off joint **19, 19', 19"** allows for varying the orientation in space of the rotation axis of the respective power take-off **17, 17',17",** referred to as **ARP1, ARP2,** by rotating it relative to the toothed crown element **13, 13', 13", 13$^{III}$, 13$^{IV}$, 13$^{V}$** about the respective take-off rotation centre **CRP1, CRP2** within an angle $\alpha$**1,** $\alpha$**2** [alpha**1**, alpha**2**] whose absolute value is preferably between **0°-45** (Figures **5, 7, 9, 11, 14, 17**).

The maximum angle $\alpha$**1,** $\alpha$**2** [alpha1 , alpha 2 ] permitted by a take-off joint 19, **19', 19"** is preferably equal to or greater than **0.5** degrees, and possibly equal to or greater than **1** degree, two degrees, three degrees or four degrees and for example between **0.5°-45°, 1°-30°, 1°-15°** or still **1°-13°** degrees.

This arrangement facilitates the installation of the reduction gearbox **10, 10', 10", 10$^{III}$, 10$^{IV}$, 10$^{V}$** making it possible to adapt the inclination -or orientation in space- of the orienting crossbars **5** that it drives relative to the inclination of the post **7** that supports it with considerable freedom of construction, eliminating or considerably reducing the costs of any *cut*/*fill* works or, more generally, earth-moving or foundation works.

The angle $\alpha$**1,** $\alpha$**2** is measured in the ideal plane containing the axes **ARC** and **ARP1** or **ARC** and **ARP2** respectively.

The absolute value of the angle $\alpha$**1,** $\alpha$**2** may also be equal to or less than **30°, 15°, 9°, 8.5°, 5°.**

Advantageously, when it comprises at least two take-off joints **19, 19', 19"** the reduction gearbox **10, 10', 10"** is configured for varying the orientation in space of the take-off rotation axis **ARP1** independently of the orientation of the axis **ARP2,** meaning that these two orientations are two independent degrees of freedom of the reduction gearbox **10, 10', 10"** and/or that they are not bound to each other by mechanical devices.

This independence further facilitates the installation of the reduction gearbox **10, 10', 10"** allowing the inclination -i.e. orientation in space- of the orienting crossbars **5** driven by it and of the post **7** supporting it to be adapted with considerable freedom, eliminating or considerably reducing the costs of any *cut*/*fill* works or, more generally, earth-moving or foundation works.

The crown contact plane **PCCor** in this description means the ideal plane perpendicular to the crown rotation axis

**ARC** and passing through at least one crown contact point **PCC** (Figure **5, 7, 9, 11, 14, 17**).

Still according to an aspect of the invention, the distance **DPC1, DPC2** along the crown rotation axis **ARC,** of each take-off rotation centre **CRP1, CRP2** from the crown contact plane **PCCor** is equal to or less than twice the external radius **RCext** of the external toothing **130** of the toothed crown element.

The radius **RCExt** is measured between the crown rotation centre **CRotCor** and the outermost edge, in the radial direction, of the toothing **130** of the toothed crown element **13, 13', 13", 13$^{III}$, 13$^{IV}$, 13$^{V}$** (Figure 5A).

Preferably the distance **DPC1, DPC2** is equal to or less than the external radius **RCext,** and even more preferably equal to or less than **0.8** times the external radius **RCext,** or equal to or less than **0.6** times the radius **RCext,** equal to or less than **0.55** times the radius **RCext,** equal to or less than **0.35** times the radius **RCext,** or equal to or less than **0.25** times the radius **RCext.**

Preferably the distance **DPC1, DPC2** is between **0-2** times the radius **RCext,** between **0.1-2** times the radius **RCext,** or between **0.2-1.5** times the radius **RCext,** between **0.3-0.6** times the radius **RCext,** between **0.2-0.4** times the radius **RCext ,** 0.2-0.3 times the radius **RCext,** 0.3-0.5 times the radius **RCext,** 0.3-0.4 times the **radiusRCext,** 0.5-0.7 times the radius **RCext or 0.5-0.6** times the radius **RCext.**

These dimensional ratios, as will be explained in more detail below, reduce the overall dimensions of the reduction gearbox **10, 10', 10", 10$^{III}$, 10$^{IV}$, 10$^{V}$** along the axis **ARC** compared to a solution with separate reduction gearbox and joint, increasing - with the same overall length of the tracker - the space that can be used to install photovoltaic panels 2 on the orienting crossbars **5** driven by the reduction gearbox **10, 10', 10", 10$^{III}$, 10$^{IV}$, 10$^{V}$.**

In addition, the small distances **DPC1, DPC2,** which are reduced by particularly suitable take-off joints **19', 19"** comprising cardan or ball joints or Rzeppa joints, allow the stresses of the take-off joints **19', 19"** to be discharged closer to the axis of the respective post **7,** advantageously stressing it more in terms of compression and less in terms of bending.

Advantageously, each take-off joint **19, 19', 19"** is at least partially and possibly only partially contained in the housing **11, 11', 11", 11$^{III}$, 11$^{IV}$,** 11$^{V}$. According to the invention, the at least one take-off joint (19, 19', 19") or each take-off joint (19, 19', 19") is at least partially contained in the toothed crown element **13, 13', 13", 13$^{III}$, 13$^{IV}$, 13$^{V}$** (Figure **5, 7, 9, 11, 14, 17).**

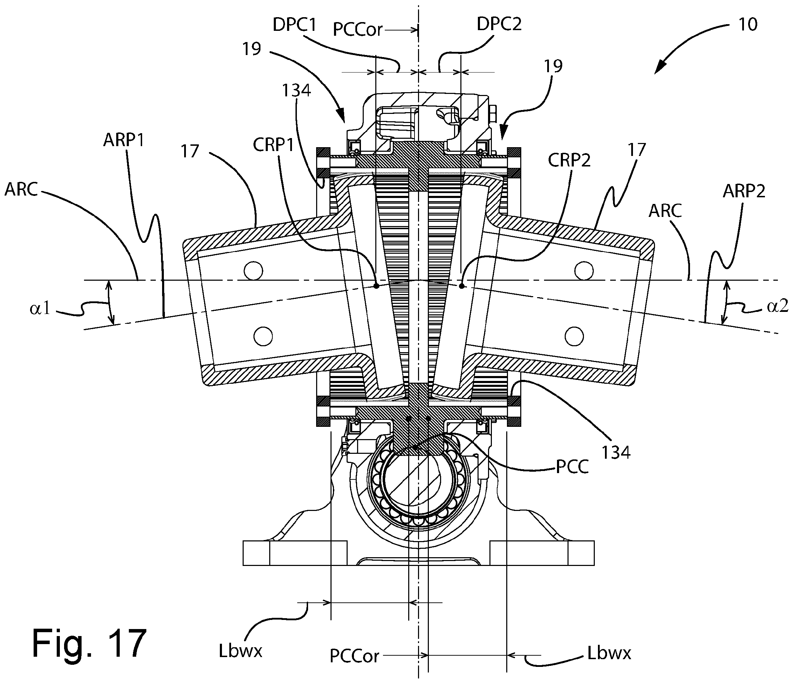

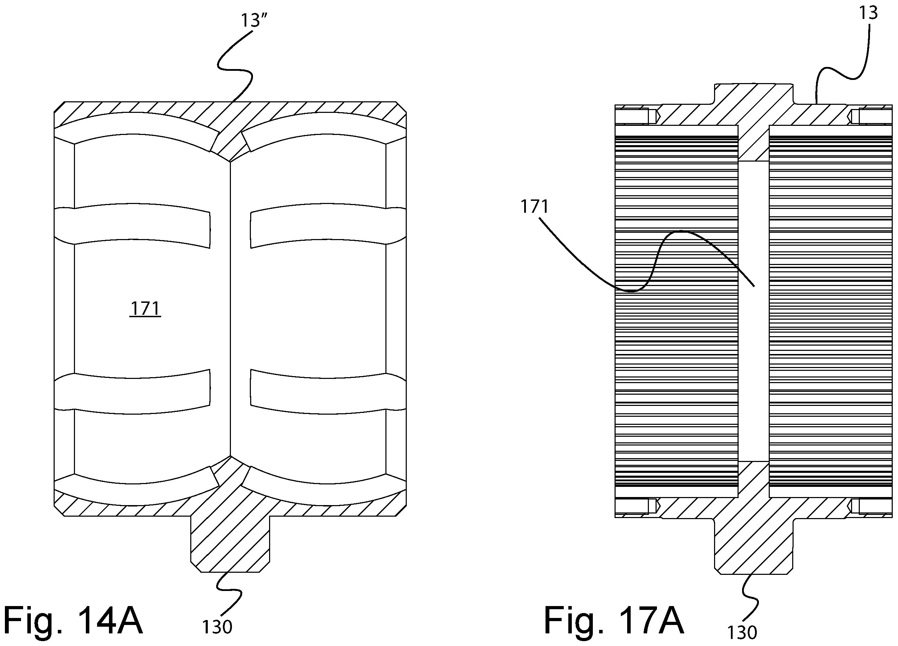

In the reduction gearbox **10, 10$^{V}$** each take-off joint **19** is only partially contained in the housing **11, 11$^{V}$** because this only contains part of the power take-offs 17 which also form a Bowex joint (R) without completely containing the take-offs **17** (Figure **9, 17**).

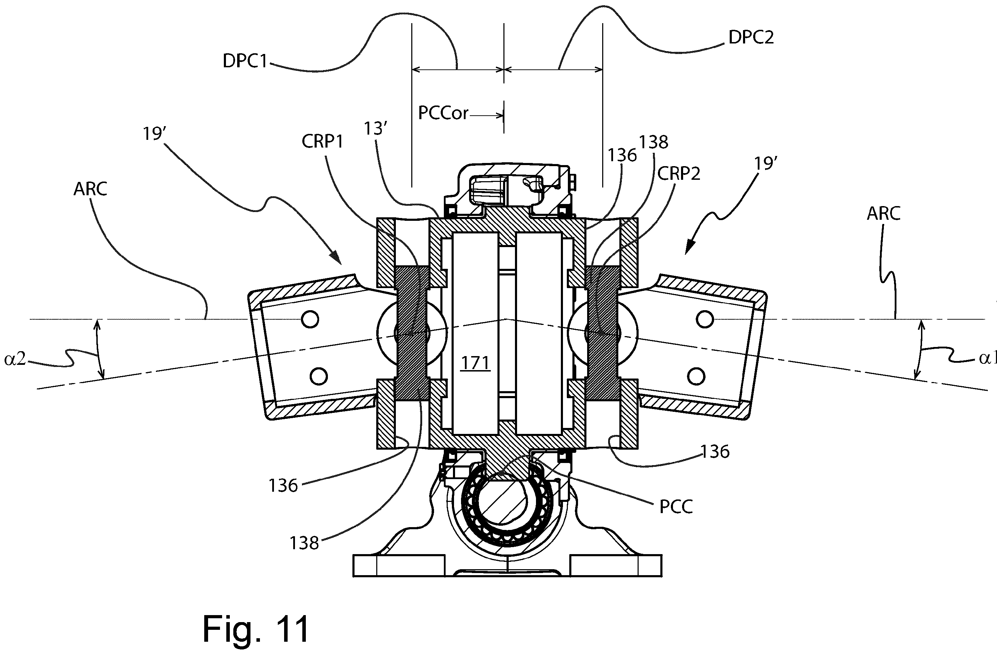

In the reduction gearbox **10', 10$^{III}$** each take-off joint **19'** is only partially contained in the housing **11', 11'''** because this only contains part of the toothed crown element **13'** which forms part of the cardan joint **19'** (Figure **5, 11**).

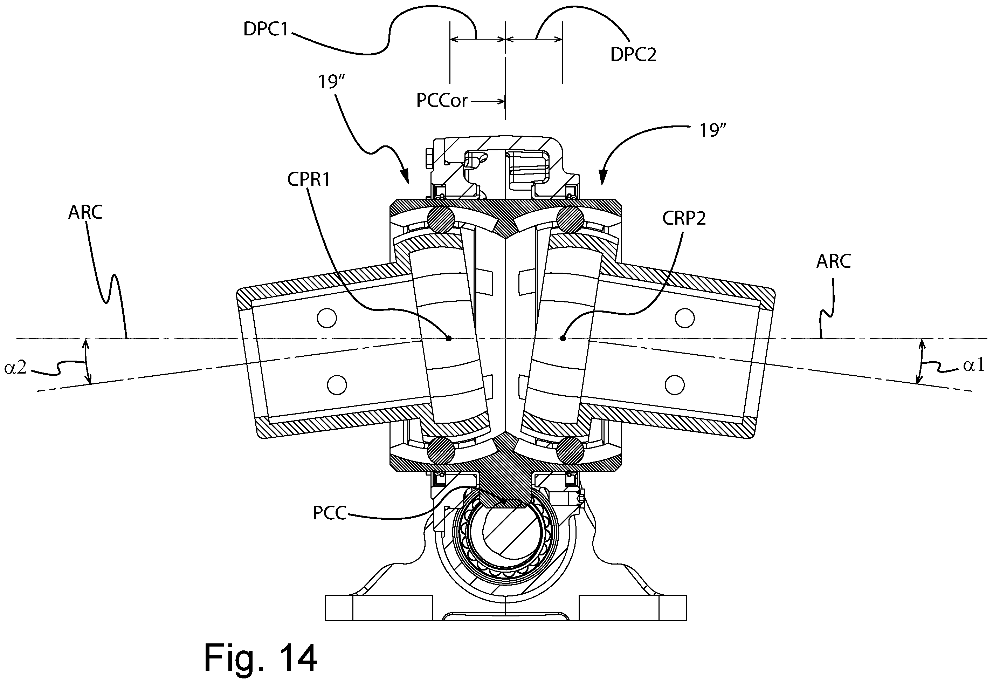

In the reduction gearbox **10", 10$^{IV}$** each take-off joint **19"** is only partially contained in the housing **11", 11$^{IV}$** because this only contains part of the power take-offs **17"** which form the RZeppa or ball joint without completely containing the take-offs **17"** (Figure **7, 14**).

Each power take-off **17, 17', 17"** may comprise for example a shaft section (Figure **5, 7, 9, 11, 14, 17**), the male component (Figure **5, 7, 9, 11, 14, 17**) or female component of a clutch.

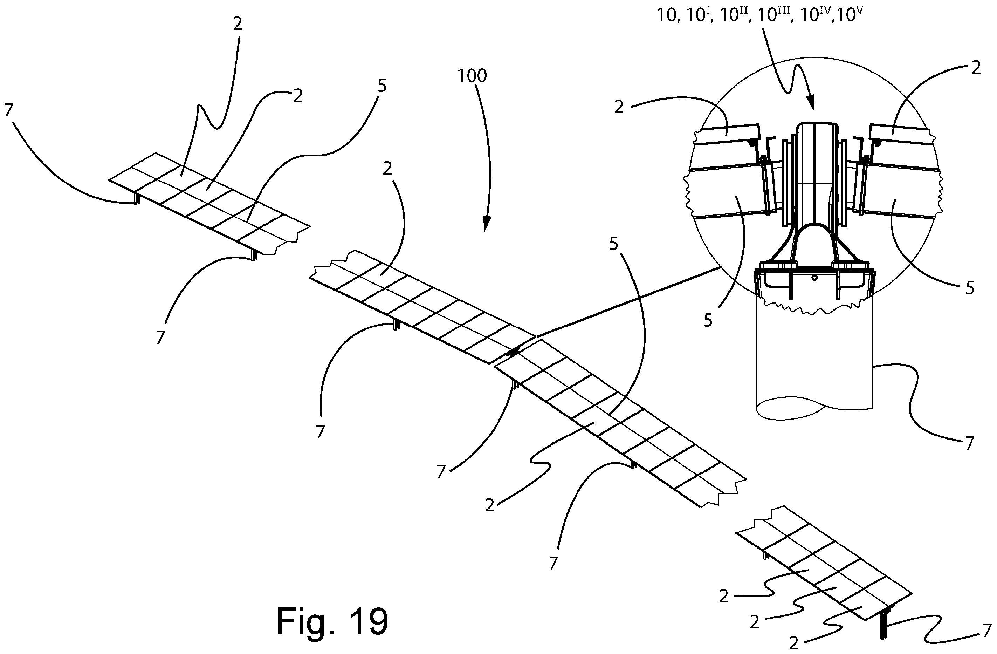

In the embodiments of Figures **5, 7, 9, 11, 14, 17** each power take-off **17, 17', 17"** comprises a short shaft section with hollow square cross-sections - i.e. tubular - which forms a male projection arranged to fit, for example, into the female cavity of the end of an orienting crossbar **5** and engage with it so that it can be driven to rotate (Figure **19-22).**

In other embodiments, the connection to the orienting crossbars can be made by a hollow seat or other cavity in the reduction gearbox, or by flange couplings between reduction gearbox and cross-members, or other coupling solutions.

Each joint take-off **19, 19', 19"** may comprise for example a so-called Bowex joint (R) (Figures **8, 9, 16, 17, 18**), a cardan joint (Figures **4, 5, 10, 11, 12**), a ball or Rzeppa joint (R) (Figures **6, 7, 13, 14, 15**).

A Bowex-type joint (R) in this description means a joint comprising:

- a female seat, such as for example the through cavity **171** passing through the toothed crown element **13;**
- a male element such as the end of the power take-off contained in the through cavity **171;**

and wherein:

- the inner walls of the female seat form an inner toothing **132;**
- the male element forms an external toothing **170** meshed or otherwise engaged with the inner toothing **132** in such a way as to transmit drive torques to or receive drive torques from the latter;
- the inner toothing **132** and external toothing **170** are such that the male element can vary its orientation in space relative to the female seat, e.g. by an absolute angle of **0°-45°** or between **0°-30°**, between 0°-**15°**, between **0°-10°,** between **0°-4°**, between **0°-3°** or between **0°-2°.**

In the Bowex-type joint (R) according to the present description, the male element may possibly but not necessarily slide along the axis of the female seat (Figure **5, 17**).

In other embodiments not shown, each take-off joint **19, 19', 19"** may comprise, for example, a Birfield joint, a Tracta joint, a Weiss joint, a tripod joint, a double or multiple cardan joint, a Thompson joint, a Malpezzi joint or, more generally, a homokinetic joint, a non-homokinetic joint or other articulated joint capable of transmitting a driving torque between two shafts while allowing the latter to vary their orientation in space.

As in the embodiment of Figure **16-18** the shaft section belonging to each power take-off **17** can engage with the toothed crown element **13** by means of a gear.

For this purpose, at or near the end of each power take-off **17** a toothing **170** is obtained comprising, for example, an external toothing with a corresponding inner toothing **132** obtained in the through-hole **171** or in any case within the toothed crown element **13**.

The teeth can form appropriately rounded ridges, for example with arc-of-a-circle edges, when viewed in a direction perpendicular to their respective rotation axis **ARP1, ARP2,** and such that the shaft sections belonging to each power take-off **17** can tilt in space and vary their orientation in their space and in that of their respective rotation axis **ARP1, ARP2** relative to the toothed crown element **13**.

The homo-kinetic take-off joints **19, 19', 19"** , whether Bowex (R), Rzeppa (R) or other types, make it advantageously possible to rotate the orientation crossbars **5, 5**A, **5**B to the left and right of the reduction gearbox while keeping the same inclination and avoiding angular misalignment while rotating them and thus introducing errors in the positioning of the photovoltaic panels **2** located on one or more parts of the tracker.

As, for example, in the embodiment of Figure **4-6** the length **Lbwx,** according to the direction parallel to the crown rotation axis **ARC,** of the inner toothing **132** obtained in the inner through-cavity of the toothed crown element **13** is preferably between **0.1-2** times the external radius **RCext** of the external gearing **130** of the toothed crown element.

More preferably the length **Lbwx** is between **0.2-1** times the radius **RCext,** or between **0.3-0.6** times, **0.4-0.6** times the radius **RCext.**

These dimensions of the length **Lbwx** allow the shaft sections belonging to each power take-off **17** not only to vary their orientation in space relative to the toothed crown element **13** but also to slide along the through cavity **171** of the element **13.**

Such sliding is preferably limited by an annular edge **134** or other axial stops that prevent the elements **17** from completely slipping out of the toothed crown **13** detaching from it.

As for example in the embodiment of Figure **4, 5, 11-13** the shaft section belonging to each power take-off **17'** can engage with the toothed crown element **13'** forming a single, double or multiple cardan joint.

For this purpose, the end of the shaft section belonging to each power take-off **17'** closest to the toothed crown centre **13'** can form a first pair of coaxial holes **172,** an end of the toothed crown element **13'** can form a second pair of coaxial holes **136** and a cross-shaped element **138** can fit into both pairs of holes **136, 138** so that it can rotate on itself in the holes and make a cardan joint.

Advantageously, the cross vaults of the two cardan joints of the reduction gearbox **10'** are angularly offset by approximately **90°** so that their assembly is homokinetic.

As for example in the embodiment of Figure **10, 11, 12** the shaft section belonging to each power take-off **17"** can engage with the toothed crown element **13"** forming a Rzeppa joint or more generally a ball joint.

For this purpose, the end of the shaft section belonging to each power take-off **17"** closest to the toothed crown centre **13"** may form a male head **135** for example in the form of a spherical segment, on which a first plurality of grooves or splines **139** are cut, extending in directions parallel to the respective axis **ARP1, ARP2** and serving as the tracks of the balls **140.**

In the through cavity **171** of the toothed crown element **13"** a seat may be obtained, for example, in the form of a portion of a spherical surface on which a second plurality of grooves or splines **137** are obtained, which extend in directions parallel to the axis **ARC** and also serve as tracks of the balls **140.**

When the male head is inserted into its respective seat in the toothed crown element **13"**, a plurality of balls **140** -such as six- and possibly a cage **142** are placed between them to hold the balls **140** in position.

Each ball **140** is inserted into both a track **139** and a corresponding track **137** allowing the toothed crown element **13"** and the respective power take-offs **17"** to apply drive torques to each other and thus forming a Rzeppa joint (R) or more generally a ball joint.

The shaft of the power input **15** is configured for driving the toothed crown element **13, 13', 13", 13$^{III}$, 13$^{IV}$, 13$^{V}$** rotating on itself around an axis **AXP** preferably and substantially perpendicular to the axis **ARC** or otherwise transverse or bent and not substantially parallel or not coincident with the axis **ARC** (Figure **5, 7, 9, 11, 14, 17**).

Two axes in space in this description are considered substantially parallel or coincident if an ideal plane passing through one of them and intersecting the other axis at the shortest possible distance forms an angle with the other axis equal to or less than **45°,** more preferably equal to or less than **30°** or **10° or 5° or 2°** .

Preferably the shaft of the power input **15** is at least partially contained in the housing **11, 11', 11", 11$^{III}$, 11$^{IV}$, 11$^{V}$**.

The reduction gearbox **10, 10', 10", 10$^{III}$, 10$^{IV}$, 10$^{V}$** preferably includes an actuator **21, 21'** configured for driving one or more of the respective power inputs **15,** driving them, for example, rotating the shaft of the power input **15** in question.

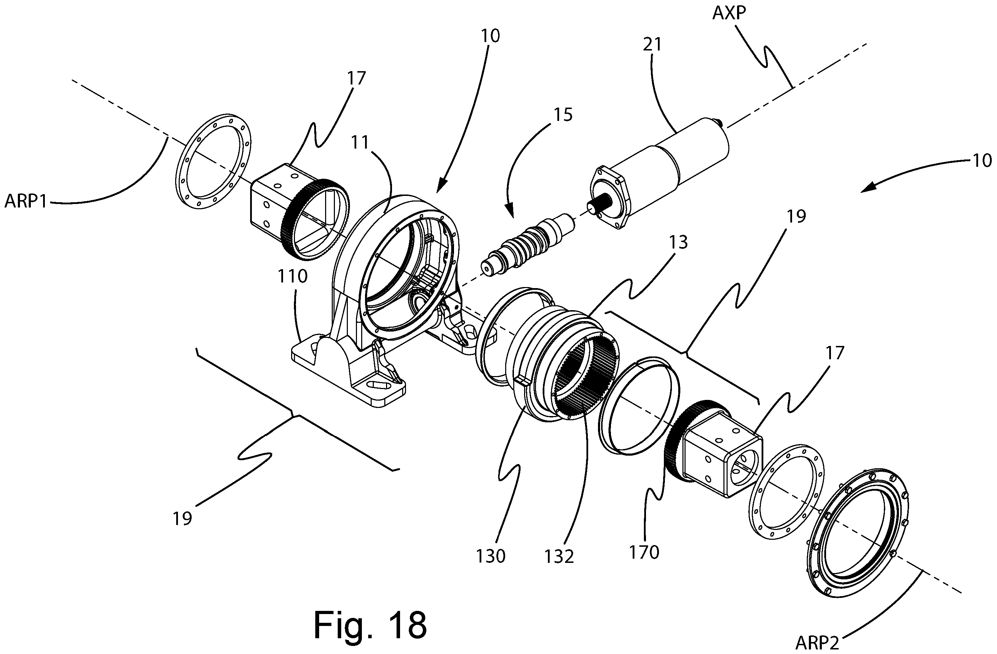

The actuator may comprise an electric, pneumatic or hydraulic motor **21** (Figure **4, 6, 7, 9, 10, 12**) or a bar or other connecting drive shaft **21'** configured for transmitting motion between the shafts or other components of the power inputs **15** of two different reduction gearboxes **10, 10', 10", 10$^{III}$, 10$^{IV}$, 10$^{V}$**, wherein the power inputs **17, 17', 17", 17$^{III}$, 17$^{IV}$, 17$^{V}$** of each of said reduction gearboxes are configured for actuating, e.g., respective orienting crossbars **5** substantially parallel - according to a horizontal direction - to the orienting crossbars **5** actuated by the power take-offs **17, 17', 17", 17$^{III}$, 17$^{IV}$, 17$^{V}$** of the other reduction gearbox **10, 10', 10", 10$^{III}$, 10$^{IV}$, 10$^{V}$**, (Figure **17, 18**).

According to a vertical direction, on the other hand, the orienting crossbars **5** driven by the two reduction gearboxes **10, 10', 10", 10$^{III}$, 10$^{IV}$, 10$^{V}$** are completely free, compared to the orienting crossbars **5** of the other reduction gearbox **10, 10', 10", 10$^{III}$, 10$^{IV}$, 10$^{V}$**, to adapt conveniently to the shape of the underlying ground.

In other words, the bar or other connecting drive shaft **21'** allows the driving torque to be transmitted between the power inputs **15** of two different reduction gearboxes **10, 10', 10", 10$^{III}$, 10$^{IV}$, 10$^{V}$** belonging to two different rows of photovoltaic panels **2** and orienting crossbars **5, 5**A, **5**B.

The connecting rod or other drive shaft **21'** allows two or more reduction gearboxes **10, 10', 10", 10$^{III}$, 10$^{IV}$, 10$^{V}$** to be driven by a single motor **21**.

The housing, **11, 11', 11", 11$^{III}$, 11$^{IV}$, 11$^{V}$**, the toothed crown element **13, 13', 13", 13$^{III}$, 13$^{IV}$, 13$^{V}$**, the rotating shaft of the power input **15**, the power take-offs **17, 17', 17", , 17$^{III}$, 17$^{IV}$, 17$^{V}$**, the take-off joints **19, 19', 19"**, the balls **140** may be for example made of steel or other suitable metal materials.

The embodiments of Figures **4-9,** wherein the reduction gearbox is provided with a single take-off joint **19, 19', 19"** are simpler and cheaper to produce than, for example, the embodiments of Figures **10-18.**

Their power take-off **17$^{III}$, 17$^{IV}$, 17$^{V}$** can be obtained on a toothed crown element **13$^{III}$, 13$^{IV}$, 13$^{V}$** which can be a simple single piece fixed without joints or other articulations to the housing **11$^{III}$, 11$^{IV}$, 11$^{V}$** or in any case to the rest of the reduction gearbox, in such a way that the power take-off rotation axis coincides with the toothed crown axis **ARC** and with that of the housing **11$^{III}$, 11$^{IV}$, 11$^{V}$**.

The toothed crown element **13$^{III}$, 13$^{IV}$, 13$^{V}$** may be made, for example, as a simple single piece, preferably tubular or otherwise hollow, possibly provided with appropriate shoulders and suitably shaped sections (Figure **4-9**).

The crown contact plane **PCCor** or more generally the housing **11$^{III}$, 11$^{IV}$, 11$^{V}$** may be inclined relative to the vertical by interposing between the post **7** and the reduction gearbox **10$^{III}$, 10$^{IV}$, 10$^{V}$** a suitable adapter such as a slotted bracket or a wedge-shaped adapter which allows to give the reduction gearbox **10$^{III}$, 10$^{IV}$, 10$^{V}$** and the axis ACR in question the desired inclination.

The power input **17$^{III}$, 17$^{IV}$, 17$^{V}$** or more in general the toothed crown element **13$^{III}$, 13$^{IV}$, 13$^{V}$** may have an axial length, according to the axis **ARC,** for example substantially equal to the axial length of the power take-off **17', 17", 17,** respectively so as to make the axial footprint of the reduction gearbox **10$^{III}$, 10$^{IV}$, 10$^{V}$** substantially symmetrical relative to the plane **PCCor.**

This makes it possible to mount orienting crossbars **5** of the same length on both sides of the reduction gearboxes **10$^{III}$, 10$^{IV}$, 10$^{V}$,** reducing the number of prefabricated crossbars that a solar tracker manufacturer must keep in stock or otherwise in the catalogue and thus reducing production, management and structural costs.

In alternative, the power take-off **17$^{III}$, 17$^{IV}$, 17$^{V}$** or more generally the toothed crown element **13$^{III}$, 13$^{IV}$, 13$^{V}$** may have an axial length, according to the axis **ARC,** noticeably less than the axial length respectively of the power take-off **17', 17", 17,** so as to reduce the axial footprint of the reduction gearbox **10$^{III}$, 10$^{IV}$, 10$^{V}$** and make it easier to mount more photovoltaic panels on a same orienting crossbar or in any case in the solar system, with the same overall length of the latter.

Advantageously, the at least one or the at least two take-off joints **19, 19', 19"** are configured for allowing, at least in one operating condition among many, the two rotation axes **ARP1, ARP2,** around which the two respective power take-offs **17, 17', 17"** rotate or in any case along which the two respective power take-offs extend, to be arranged substantially coaxial to each other.

This facilitates the assembly of the reduction gearboxes **10, 10', 10"** and of the solar tracker systems **100, 100', 100"** to which they belong, allowing the reduction gearboxes **10, 10', 10"** to adapt more conveniently to a greater variety of grounds.

As already partially mentioned above, each power take-off **17, 17', 17"** can be fixed to one end of a crossbar **5** of a solar tracker system **100, 100', 100"** so as to drive the crossbar **5** rotating it around its own longitudinal axis, which preferably coincides with the axis **ARP1, ARP2** (Figure **13-16**) or parallel thereto.

In some embodiments, the rotation axis of the crossbar **5** may not coincide with its own longitudinal axis, but be shifted -for example, parallel- above it, to coincide with or at least come close to the barycentre axis of the rotating part of the solar tracker.

Each orienting crossbar **5** of the system **100, 100', 100"** may be between **10-200** metres in length, and more preferably between **10-160** metres, between **10-120** metres, between **20-90** metres, between **30-60** metres or between **45-60** metres.

The system **100, 100', 100"** comprises a plurality of uprights **7** made for example as metal or concrete posts, on which one or more crossbars **5** rest.

Each orienting crossbar **5** of the system **100, 100', 100"** extends preferably and approximately parallel to the average course of the ground (Figure **14**, **16**).

A plurality of photovoltaic panels **2** is fixed to each orienting crossbar **5.**

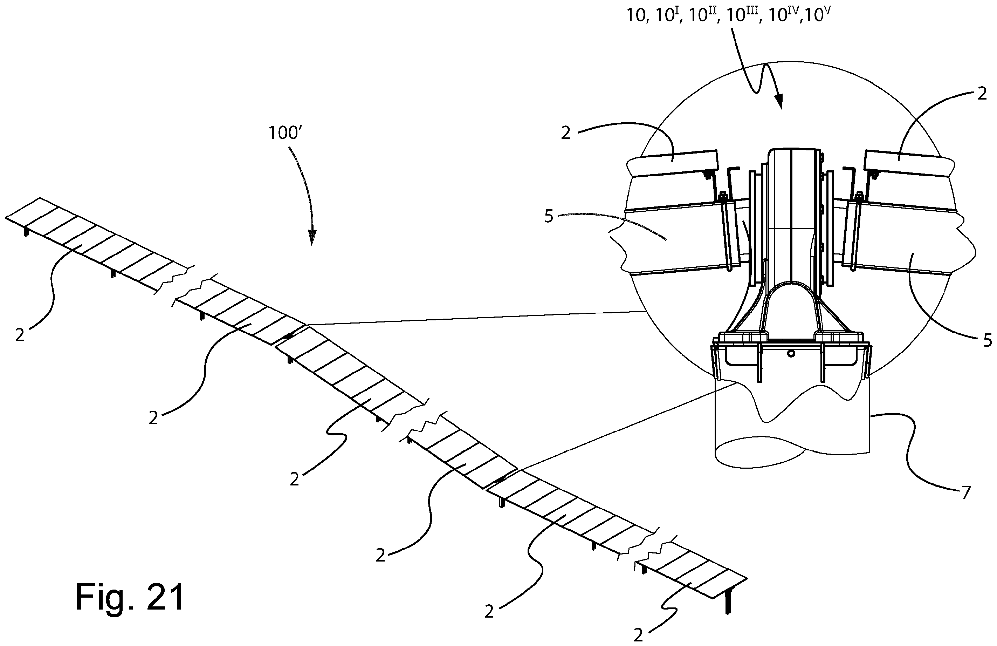

These panels **2** preferably form a single row (Figures **19**, **21**) but may possibly form more than one row longitudinal to the respective crossbar **5,** in the already described "vertical" or "landscape" configurations.

Each reduction gearbox **10, 10', 10", 10$^{III}$, 10$^{IV}$, 10$^{V}$** can be fixed e.g. on the upper end of an upright or other post **7** of the solar tracker system **100, 100', 100"** by means of suitable fixing brackets.

Each reduction gearbox **10, 10', 10", 10$^{III}$, 10$^{IV}$, 10$^{V}$** described above allows two orienting crossbars **5** with different orientations and inclinations in space to be connected and driven in rotation; each orienting crossbar **5** will therefore preferably be more or less parallel to the average course of the ground surface over a shorter length (Figure **14**, **16**).

This means that a row of solar panels **2** and solar trackers can follow the course of the ground by describing also a broken line of various shapes, allowing the orienting crossbars **5** and the various straight sections of the panels **2** to form angles β [beta], β**1**, β**2...** β**N** with each other that are relatively accentuated (Figures **14**, **16**) and which for example can be up to **15°** degrees, **20°** degrees or even more: in the solar trackers **100, 100', 100",** the relationship

$$[REL.1] \qquad \beta, \beta1, \beta2 \ldots \beta N \leq 2*\alpha1, 2*\alpha2$$

is true.

In other words, the broken line with which the orienting crossbars **5** and the various straight sections of the panels **2** of the system **100, 100', 100"** follow the course of the ground best, under the same conditions - e.g. irregularities in the ground surface, costs of the *cut/fill* works or other earth-moving works, costs for compensating undulations and irregularities in the ground with the above-ground length of the posts **7,** length of the orienting crossbars **5** - must be much less straight than the line formed by the orienting crossbars **5** of a same row of photovoltaic panels **2** of a solar tracker of the known-type, or in any case it creates the same broken line at lower costs and footprint.

Furthermore, since, as said, the distance **DPC1, DPC2** along the crown rotation axis **ARC,** of each take-off rotation centre **CRP1, CRP2** from the crown contact plane **PCCor** is equal to or less than twice the external radius **RCext** of the external toothing **130** of the toothed crown element, the ends of two orienting crossbars **5** connected to a same reduction gearbox **10, 10', 10", 10$^{III}$, 10$^{IV}$, 10$^{V}$** may be closer to the known trackers provided with joints separated by reduction gearboxes thus creating a more compact solution which -with the same overall length - makes it possible to install more photovoltaic elements **2** on a same row.

The possibility, at least in some embodiments, of mutually orienting in space the axes **ARC, ARP1, ARP2,** the toothed crown element **13, 13', 13", 13$^{III}$, 13$^{IV}$, 13$^{V}$** and the power take-offs **17, 17', 17"** with almost total freedom, at least within the above-mentioned wide margins, allows to install and commission the posts **7** and the orienting crossbars **5** easily and cost-effectively.

A solar tracker system **100, 100', 100"** may comprise not only two but also, for example, three, four, five, six, seven, eight, nine, ten, fifteen, twenty or even several orienting crossbars **5** arranged in a single row one after the other and connected two by two by means of a reduction gearbox **10, 10', 10", 10$^{III}$, 10$^{IV}$, 10$^{V}$**.

In such case, the reduction gearboxes can be driven by a same motor/actuator by a transmission system or by separate actuators operating synchronously.

An example of the installation, operation and use of the reduction gearboxes **10, 10', 10", 10$^{III}$, 10$^{IV}$, 10$^{V}$** and the solar tracker systems **100, 100', 100"** described above is now described.

The driven motor -e.g. electric- **21** makes the screw-profile shaft of the power input **15** rotate, which in turn makes the toothed crown element **13, 13', 13", 13$^{III}$, 13$^{IV}$, 13$^{V}$** rotate around the axis **ARC** relative to the housing **11, 11', 11", 11$^{III}$, 11$^{IV}$, 11$^{V}$** and therein.

The rotation of the toothed crown element on itself **13, 13', 13", 13$^{III}$, 13$^{IV}$, 13$^{V}$** makes the power take-offs **17, 17', 17"** rotate about their own longitudinal axes **ARC1, ARC2** thereby rotating the orienting crossbars **5** and the photovoltaic panels fixed thereto, and changing the inclination of the panels **2** themselves, for example to optimise them relative to the direction of sun rays and increase the electricity produced by the panels **2.**

In the reduction gearbox **10** the toothed crown element **13** rotates the power take-offs **17** by the inner toothing **132** which engages and makes the external toothing **170** of the power take-offs **17** rotate around the axis **ARP1, ARP2.**

In the reduction gearbox **10'** the toothed crown element **13'** rotates the power take-offs **17'** and drives the cross-shaped elements **138** to rotate which in turn make the power take-offs **17'** rotate around the axis **ARP1, ARP2.**

In the reduction gearbox **10"** the toothed crown element **13"** makes the power take-offs **17"** rotate making the grooves or splines **137,** which are formed in the female housing that accommodates the male heads **135** of the power take-offs **17"**, rotate.

The grooves or splines **137** make the balls **140** rotate around their respective axes **ARP1** or **ARP2,** which balls **140** make, in turn, the grooves or splines **139** formed on the male head **135** of each power take-off **17"** rotate around these axes.

The embodiments described above are susceptible to numerous modifications and variants, without departing from the scope of the present invention.

For example, the balls **140** of a joint **19"** can even be more or less than six, e.g. they can be two, three, four, five, seven, eight, nine, ten, twelve or even **20** and more balls **140.**

The power input **15** can engage with the toothed crown element **13, 13', 13", 13$^{III}$, 13$^{IV}$, 13$^V$** to form not only a worm gear mechanism but also, for example, a cam mechanism, a parallel or inclined axis gear, a tilted plane mechanism, a leverage mechanism or others.

More generally, in a further aspect thereof, the invention relates to a reduction gearbox **(10, 10', 10", 10$^{III}$, 10$^{IV}$, 10$^V$)** comprising a housing **(11, 11', 11", 11$^{III}$, 11$^{IV}$, 11$^V$),** at least one toothed crown element **(13, 13', 13", 13$^{III}$, 13$^{IV}$, 13$^V$),** a power inlet **(15),** at least two power take-offs **(17, 17', 17",17$^{III}$, 17$^{IV}$, 17$^V$),** at least one take-off joint **(19, 19', 19");** wherein:

- the toothed crown element **(13, 13', 13", 13$^{III}$, 13$^{IV}$, 13$^V$)** forms a gear toothing **(130);**
- the power input **(15)** is configured for driving the toothed crown element **(13, 13', 13", 13$^{III}$, 13$^{IV}$, 13$^V$);**
- the toothed crown element **(13, 13', 13", 13$^{III}$, 13$^{IV}$, 13$^V$)** is configured for driving both power take-offs **(17, 17', 17", 17$^{III}$, 17$^{IV}$, 17$^V$)** by rotating about itself around a crown rotation axis **(ARC);**
- each power take-off **(17, 17', 17")** comprises a rotating interface configured for rotating about itself about a take-off rotation axis **(ARP1, ARP2)** and to engage and drive a shaft or other driven rotating element;
- the power input **(15)** is configured for engaging with the toothing **(130)** of the toothed crown element **(13, 13', 13", 13$^{III}$, 13$^{IV}$, 13$^V$)** coming into contact therewith in at least one crown contact point **(PCC);**
- the at least one take-off joint **(19, 19', 19")** allows to vary the orientation in space of at least one take-off rotation axis **(ARP1, ARP2)** by rotating it relative to the toothed crown element **(13, 13', 13", 13$^{III}$, 13$^{IV}$, 13$^V$)** around a respective take-off rotation centre **(CRP1, CRP2);**
- the distance **(DPC1, DPC2),** according to the crown rotation axis **(ARC),** of each take-off rotation centre **(CRP1, CRP2)** from the crown contact plane **(PCCor)** is equal to or less than twice the external radius **(RCext)** of the toothing **(130)** of the toothed crown element **(13, 13', 13", 13$^{III}$, 13$^{IV}$, 13$^V$),** wherein the crown contact plane **(PCCor)** is the ideal plane perpendicular to the crown rotation axis **(ARC)** and passing through the at least one crown contact point **(PCC).**

According to the invention, the at least one take-off joint **(19, 19', 19")** or each take-off joint **(19, 19', 19")** is at least partially contained in the toothed crown element **(13, 13', 13", 13$^{III}$, 13$^{IV}$, 13$^V$).**

A solar tracker system according to the invention may comprise a single reduction gearbox **10, 10', 10", 10$^{III}$, 10$^{IV}$, 10$^V$** or a plurality thereof, for example two, three, four, five, six, seven, eight, nine, ten, eleven, fifteen, twenty, forty of them arranged one after the other so as to form a single row or several rows parallel or longitudinal to each other.

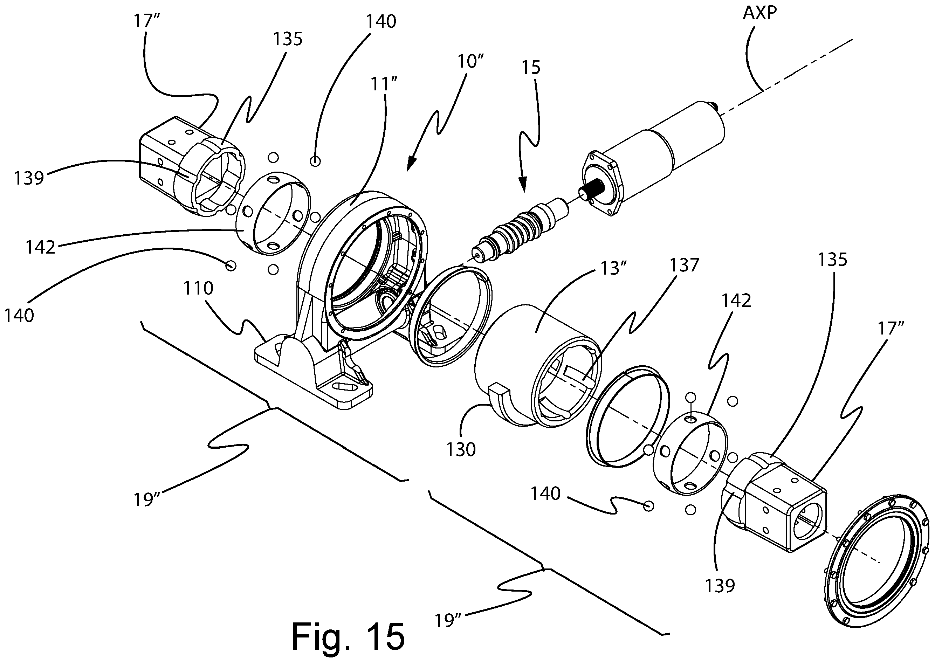

A solar tracker system according to the invention may comprise not only a single row of photovoltaic panels **2** fixed on a single row of orienting crossbars **5** (Figure **13, 15**) but also several rows of photovoltaic panels **2** fixed on several rows of orienting crossbars **5,** wherein such rows are substantially parallel or longitudinal to each other (Figure **18**) while still following with broken lines the undulations and other irregularities of the ground as for example in Figure **13, 15.**

A solar tracker system according to the invention may comprise a plurality of orienting crossbars **5** of substantially the same length or of different lengths.

A solar tracker system according to the invention may comprise a plurality of uprights or other posts **7,** for example three, four, five, six, seven, eight, nine, ten, eleven, fifteen, twenty, forty of them arranged one after the other so as to form a single row or several rows parallel or longitudinal to each other.

Every reference in this description to "an embodiment", "an example of embodiment" means that a particular characteristic or structure described in relation to such embodiment is comprised in at least one embodiment of the invention and in particular in a particular variant of the invention as defined in a main claim.

The fact that such expressions appear in various passages of the description does not imply that they are necessarily referred solely to the same embodiment.

In addition, when a feature, element or structure is described in relation to a particular embodiment, it is observed that it is within the competence of the person skilled in the art to apply such feature, element or structure to other embodiments.

Numerical references which only differ in terms of different superscripts **21', 21", 21$^{III}$** unless specified otherwise indicate different variants of an element with the same name.

Furthermore, all of the details can be replaced by technically equivalent elements.

In practice, the materials used, as well as the dimensions thereof, can be of any type according to the technical requirements.

It must be understood that an expression of the type "A *comprises* B, C, D" or "A *is formed by* B, C, D" also comprises and describes the particular case in which *"A consists of* B, C, D".

The expression *"A comprises a B element"* unless otherwise specified is to be understood as *"A comprises one or more elements of B"*.

References to a "first, second, third, ... n-th entity" have the sole purpose of distinguishing them from each other but the indication of the n-th entity does not necessarily imply the existence of the first, second ... (n-**1**)th entity.

The examples and lists of possible variants of the present application are to be construed as non-exhaustive lists.

## Claims

1. Reduction gearbox (**10, 10', 10", 10$^{III}$, 10$^{IV}$, 10$^{V}$**) comprising a housing (**11, 11', 11", 11$^{III}$, 11$^{IV}$, 11$^{V}$**), at least one toothed crown element (**13, 13', 13", 13$^{III}$, 13$^{IV}$, 13$^{V}$**), a power input (**15**), at least two power take-offs (**17, 17', 17", 17$^{III}$, 17$^{IV}$, 17$^{V}$**), at least one take-off joint (**19, 19', 19"**);
   wherein:

   - the toothed crown element (**13, 13', 13", 13$^{III}$, 13$^{IV}$, 13$^{V}$**) forms a gear toothing (**130**);
   - the power input (**15**) is configured for driving the toothed crown element (**13, 13', 13", 13$^{III}$, 13$^{IV}$, 13$^{V}$**);
   - the toothed crown element (**13, 13', 13", 13$^{III}$, 13$^{IV}$, 13$^{V}$**) is configured for driving both power take-offs (17, **17', 17", 17$^{III}$, 17$^{IV}$, 17$^{V}$**) by rotating about itself around a crown rotation axis (**ARC**);
   - each power take-off (**17, 17', 17"**) comprises a rotating interface configured for rotating about itself about a take-off rotation axis (**ARP1, ARP2**) and to engage and drive a shaft or other driven rotating element;
   - the power input (**15**) is configured for engaging with the toothing (**130**) of the toothed crown element (**13**, **13', 13", 13$^{III}$, 13$^{IV}$, 13$^{V}$**) coming into contact therewith in at least one crown contact point (**PCC**);
   - the at least one take-off joint (**19, 19', 19"**) allows to vary the orientation in space of at least one take-off rotation axis (**ARP1, ARP2**) by rotating it relative to the toothed crown element (**13, 13', 13", 13$^{III}$, 13$^{IV}$, 13$^{V}$**) around a respective take-off rotation centre (**CRP1, CRP2**); **characterized in that**:
   - the distance (**DPC1, DPC2**), according to the crown rotation axis (**ARC**), of each take-off rotation centre (**CRP1, CRP2**) from the crown contact plane (**PCCor**) is equal to or less than twice the external radius (**RCext**) of the toothing (**130**) of the toothed crown element (**13, 13', 13", 13$^{III}$, 13$^{IV}$, 13$^{V}$**), wherein the crown contact plane (**PCCor**) is the ideal plane perpendicular to the crown rotation axis (**ARC**) and passing through the at least one crown contact point (**PCC**);
   - the at least one take-off joint (**19, 19', 19"**) or each take-off joint (**19, 19', 19"**) is at least partially contained in the toothed crown element (**13, 13', 13",13$^{III}$, 13$^{IV}$, 13$^{V}$**).

2. Reduction gearbox according to claim **1,** wherein the distance (**DPC1, DPC2**) of each take-off rotation centre (**CRP1, CRP2**) from the crown contact plane (**PCCor**) is equal to or less than **0.6** times the external radius (**RCext**) of the toothing (**130**) of the toothed crown element (**13, 13', 13", 13$^{III}$, 13$^{IV}$, 13$^{V}$**).

3. Reduction gearbox according to claim **1** or **2,** comprising at least two take-off joints (**19, 19', 19"**).

4. Reduction gearbox according to one or more of the preceding claims, wherein the at least two power take-offs (**17, 17', 17"**) extend from and/or protrude from and/or are formed on two sides, substantially opposite to each other or otherwise substantially different from each other, of the reduction gearbox (**10, 10', 10", 10$^{III}$, 10$^{IV}$, 10$^{V}$**).

5. Reduction gearbox according to one or more preceding claims, wherein the at least one take-off joint (**19**, **19', 19"**), the at least two take-off joints (**19, 19', 19"**) or each take-off joint (**19, 19', 19"**) allows to vary the orientation in space of at least one take-off rotation axis (**ARP1, ARP2**) by rotating it relative to the toothed crown element (**13, 13', 13", 13$^{III}$, 13$^{IV}$, 13$^{V}$**) by an angle (**α1, α2**) whose absolute value is between **0°-45°**.

6. Reduction gearbox at least according to claims 3 and **5,** wherein the at least two take-off joints (**19, 19', 19"**) are configured for varying the orientation in space of a take-off rotation axis (**ARP1, ARP2**) by rotating it relative to another take-off rotation axis (**ARP2, ARP1**) by an angle whose absolute value is between **0°-90°**.

7. Reduction gearbox according to one or more of the preceding claims, wherein the at least one take-off joint (**19, 19', 19"**), the at least two take-off joints (**19, 19', 19"**) or each take-off joint (**19, 19', 19"**) in at least one operating condition allows the at least two take-off rotation axes (**ARP1, ARP2**) to be kept substantially coaxial.

8. Reduction gearbox according to one or more of the preceding claims, wherein the power input (**15**) comprises one or more of the following elements: a rotating shaft, the screw or other threaded shaft of a worm screw assembly, a pinion, spool or other toothed wheel for example with external toothing.

9. Reduction gearbox according to claim **8,** wherein the power input (**15**) engages with the toothed crown element (**13, 13', 13", 13$^{III}$, 13$^{IV}$, 13$^{V}$**) so as to form a worm screw mechanism.

10. Reduction gearbox according to one or more of the preceding claims, wherein at least part or each take-off joint (**19**) comprises one or more cardan joints.

11. Reduction gearbox according to one or more of the preceding claims, wherein at least part of the take-off joints or each take-off joint (**19**) comprises:

- a female seat, such as for example the through cavity (**171**) passing through the toothed crown element (**13**);
- a male element such as, for example, the end of the power take-off (**17**) contained in the through cavity (**171**);

and wherein:

- the inner walls of the female seat form an inner toothing (**132**);
- the male element (**17**) forms an external toothing (**170**) meshed or otherwise engaged with the inner toothing (**132**) so as to transmit to the latter driving torques or to receive from the latter driving torques;
- the inner (**132**) and outer (**170**) toothings are such as to allow the male element to vary its orientation in space relative to the female seat, by an angle equal to or greater than **0.5** degrees.

12. System (**100, 100', 100"**) for producing electricity mainly by photovoltaic effect, comprising one or more solar trackers each comprising:

- at least two orienting crossbars (**5**);
- a plurality of photovoltaic panels (**2**) some of which are fixed on one of the orienting crossbars (5), part of which are fixed on the other of the orienting crossbars (**5**);
- at least one reduction gearbox (**10, 10', 10", 10$^{III}$, 10$^{IV}$, 10$^{V}$**) having the features according to one or more of the preceding claims, and each of whose power take-offs (**17, 17', 17"**) is fixed to one end of each of the orienting crossbars (**5**) so as to support said end and to be able to drive the orienting crossbars (**5**) by rotating them about themselves around a longitudinal rotation axis (**ARP1, ARP2**) to a respective orienting crossbar (**5**) thus varying the orientation in space of the respective photovoltaic panels (**2**).

13. Process for installing a system (**100, 100', 100"**) for producing electricity mainly by photovoltaic effect, comprising the following operations:

- providing a system (**100, 100', 100"**) having the features according to claim **12;**
- installing the system (**100, 100', 100"**) on a substantially non-plain ground, arranging the at least two orienting crossbars (**5**) so that their longitudinal rotation axes (**ARP1, ARP2**) form between them an angle (β, β**1,** β**2**) equal to or greater than **0.5** degrees.

14. Process according to claim **13,** comprising the following operations:

- providing a system (**100, 100', 100"**) having the features according to claim 12 and provided with at least three orienting crossbars (**5**);
- installing the system (**100, 100', 100"**) on a substantially non-flat ground, arranging the at least three orienting crossbars (**5**) so that their longitudinal rotation axes (**ARP1, ARP2**) substantially form a broken line.

15. Process according to claim **13** or **14,** wherein the system is installed on a substantially non-flat ground, arranging the at least two orienting crossbars (**5**) so that their longitudinal rotation axes (**ARP1, ARP2**) form between them an angle (β, β**1,** β**2**) between **0°-45°** degrees.

**Patentansprüche**

1. Untersetzungsgetriebe **(10, 10', 10", 10$^{III}$, 10$^{IV}$, 10$^{V}$)**, umfassend ein Gehäuse **(11, 11', 11", 11$^{III}$, 11$^{IV}$, 11$^{V}$)**, mindestens ein Zahnkranzelement **(13, 13', 13", 13$^{III}$, 13$^{IV}$, 13$^{V}$)**, eine Leistungsaufnahme **(15)**, mindestens zwei Zapfwellen **(17, 17', 17", 17$^{III}$, 17$^{IV}$, 17$^{V}$)**, mindestens ein Abtriebsgelenk **(19, 19', 19")**; wobei:

   - das Zahnkranzelement **(13, 13', 13", 13$^{III}$, 13$^{IV}$, 13$^{V}$)** eine Verzahnung **(130)** bildet;
   - die Leistungsaufnahme (**15**) für den Antrieb des Zahnkranzelements **(13, 13', 13", 13$^{III}$, 13$^{IV}$, 13$^{V}$)** ausgelegt ist;
   - das Zahnkranzelement **(13, 13', 13", 13$^{III}$, 13$^{IV}$, 13$^{V}$)** für den Antrieb beider Zapfwellen **(17, 17', 17", 17$^{III}$, 17$^{IV}$, 17$^{V}$)** durch Drehung um sich selbst um eine Kranzdrehachse **(ARC)** anzutreiben;
   - jede Zapfwelle **(17, 17', 17")** eine rotierende Schnittstelle umfasst, die so konfiguriert ist, dass sie sich um sich selbst um eine Abtriebsdrehachse **(ARP1, ARP2)** dreht und eine Welle oder ein anderes angetriebenes rotierendes Element in Eingriff nimmt und antreibt;
   - die Leistungaufnahme **(15)** zum Eingriff mit der Verzahnung **(130)** des Zahnkranzelements **(13, 13', 13", 13$^{III}$, 13$^{IV}$, 13$^{V}$)** ausgelegt ist und in mindestens einem Kranzkontaktpunkt **(PCC)** damit in Kontakt kommt;
   - das mindestens eine Abtriebsgelenk **(19, 19', 19")** es erlaubt, die räumliche Ausrichtung von mindestens einer Abtriebsdrehachse **(ARP1, ARP2)** zu variieren, indem diese relativ zum Zahnkranzelement **(13, 13', 13", 13$^{III}$, 13$^{IV}$, 13$^{V}$)** um einen jeweiligen Abtriebsdrehmittelpunkt **(CRP1, CRP2)** gedreht wird; **dadurch gekennzeichnet, dass**:
   - der Abstand **(DPC1, DPC2),** gemäß der Kranzdrehachse (**ARC**), jedes Abtriebsdrehmittelpunkts **(CRP1)** von der Kranzkontaktebene **(PCCor)** gleich oder kleiner ist als der doppelte Außenradius **(RCext)** der Verzahnung (**130**) des Zahnkranzelements **(13, 13', 13", 13$^{III}$, 13$^{IV}$, 13$^{V}$)**, wobei die Kranzkontaktebene **(PCCor)** die ideale Ebene ist, die senkrecht zur Kranzdrehachse (**ARC**) verläuft und durch den mindestens einen Kranzkontaktpunkt (**PCC**) geht;
   - das mindestens eine Abtriebsgelenk **(19, 19', 19")** oder jedes Abtriebsgelenk **(19, 19', 19")** mindestens teilweise in dem Zahnkranzelement **(13, 13', 13", 13$^{III}$, 13$^{IV}$, 13$^{V}$)** enthalten ist.

2. Untersetzungsgetriebe nach Anspruch **1,** wobei der Abstand **(DPC1, DPC2)** jedes Abtriebsdrehmittelpunkts **(CRP1, CRP2)** von der Kranzkontaktebene **(PCCor)** gleich oder kleiner ist als das **0,6**-fache des Außenradius **(RCext)** der Verzahnung (**130**) des Zahnkranzelements **(13, 13', 13", 13$^{III}$, 13$^{IV}$, 13$^{V}$).**

3. Untersetzungsgetriebe nach Anspruch **1** oder **2,** umfassend mindestens zwei Abtriebsgelenke **(19, 19', 19").**

4. Untersetzungsgetriebe nach einem oder mehreren der vorstehenden Ansprüche, wobei die mindestens zwei Zapfwellen (17, **17', 17") sich** von zwei Seiten des Untersetzungsgetriebes **(10, 10', 10",10$^{III}$,10$^{IV}$, 10$^{V}$),** im Wesentlichen einander gegenüberliegend oder auf andere Weise im Wesentlichen voneinander verschieden, erstrecken und/oder daraus vorstehen und/oder darauf gebildet sind.

5. Untersetzungsgetriebe nach einem oder mehreren der vorstehenden Ansprüche, wobei das mindestens eine Abtriebsgelenk **(19, 19', 19"),** die mindestens zwei Abtriebsgelenke **(19, 19', 19")** oder jedes Abtriebsgelenk **(19, 19', 19")** es erlaubt, die räumliche Ausrichtung mindestens einer Abtriebsdrehachse **(ARP1, ARP2)** zu verändern, indem sie relativ zu dem Zahnkranzelement **(13, 13', 13", 13$^{III}$, 13$^{IV}$, 13$^{V}$)** um einen Winkel **($\alpha$1, $\alpha$2)** gedreht wird, dessen Absolutwert zwischen **0°** und **45°** liegt.

6. Untersetzungsgetriebe mindestens nach den Ansprüchen **3** und **5,** wobei die mindestens zwei Abtriebsgelenke **(19, 19', 19")** zur Veränderung der räumlichen Orientierung einer Abtriebsdrehachse **(ARP1, ARP1, ARP2)** durch Drehen relativ zu einer anderen Abtriebsdrehachse ( **ARP2, ARP1)** um einen Winkel, dessen Absolutwert zwischen **0°** und **90°** liegt.

7. Untersetzungsgetriebe nach einem oder mehreren der vorstehenden Ansprüche, wobei das mindestens eine Abtriebsgelenk **(19, 19', 19"),** die mindestens zwei Abtriebsgelenk **(19, 19', 19")** oder jedes Abtriebsgelenk **(19, 19', 19")** in mindestens einem Betriebszustand es erlaubt, die mindestens zwei Abtriebsdrehachse **(ARP1, ARP2)** im Wesentlichen koaxial zu halten.

8. Untersetzungsgetriebe nach einem oder mehreren der vorstehenden Ansprüche, wobei die Leistungaufnahme (**15**) eines oder mehrere der folgenden Elemente umfasst: eine rotierende Welle, die Schrauben- oder andere Gewindewelle einer Schneckenschraubenanordnung, ein Ritzel, eine Spule oder ein anderes Zahnrad, beispielsweise mit Außenverzahnung.

9. Untersetzungsgetriebe nach Anspruch **8,** wobei die Leistungsaufnahme (**15**) mit dem Zahnkranzelement **(13, 13', 13'', 13<sup>III</sup>, 13<sup>IV</sup>, 13<sup>V</sup>)** in Eingriff steht, um einen Schneckenschraubenmechanismus zu bilden.

10. Untersetzungsgetriebe nach einem oder mehreren der vorstehenden Ansprüche, wobei mindestens ein Teil oder jedes Abtriebsgelenk (**19**) ein oder mehrere Kardangelenke umfasst.

11. Untersetzungsgetriebe nach einem oder mehreren der vorstehenden Ansprüche, wobei mindestens ein Teil der Abtriebsgelenke oder jedes Abtriebsgelenk (**19**) umfasst:

   - einen weiblichen Sitz, wie zum Beispiel den durchgehenden Hohlraum (**171**), der durch das Zahnkranzelement (**13**) geht;
   - ein männliches Element, wie zum Beispiel das Ende der Zapfwelle (**17**), das in dem durchgehenden Hohlraum (**171**) enthalten ist;

   und wobei:

   - die Innenwände des weiblichen Sitzes eine Innenverzahnung (**132**) bilden;
   - das männliche Element (**17**) eine Außenverzahnung (**170**) bildet, die in die Innenverzahnung (**132**) eingreift oder anderweitig mit ihr in Eingriff steht, um Antriebsdrehmomente auf letztere zu übertragen oder von letzterer zu empfangen;
   - die Innen- (**132**) und Außenverzahnungen (**170**) sind so beschaffen, dass das männliche Element seine räumliche Ausrichtung relativ zum weiblichen Sitz um einen Winkel gleich oder größer als **0,5** Grad verändern kann.

12. System **(100, 100', 100'')** zur Stromerzeugung hauptsächlich durch photovoltaischen Effekt, umfassend ein oder mehrere Solar-Tracker, die jeweils umfassen:

   - mindestens zwei Ausrichtungsquerstäbe **(5);**
   - eine Vielzahl von Photovoltaikpaneelen (**2**), von denen einige an einem der Ausrichtungsquerstäbe (**5**) und ein Teil an dem anderen der Ausrichtungsquerstäbe (**5**) befestigt sind;
   - mindestens ein Untersetzungsgetriebe **(10, 10', 10'', 10<sup>III</sup>, 10<sup>IV</sup>, 10<sup>V</sup>)** mit den Merkmalen gemäß einem oder mehreren der vorstehenden Ansprüche, und dessen Zapfwellen **(17, 17', 17'')** an einem Ende jedes der Ausrichtungsquerstäbe (**5**) befestigt ist, um dieses Ende zu tragen und die Ausrichtungsquerstäbe (**5**) durch Drehung um sich selbst um eine Längsdrehachse **(ARP1, ARP2)** zu einem jeweiligen Ausrichtungsquerstab (**5**) antreiben zu können und so die räumliche Ausrichtung der jeweiligen Photovoltaikpaneele (2) zu ändern.

13. Verfahren zur Installation eines Systems **(100, 100', 100'')** zur Stromerzeugung hauptsächlich durch photovoltaischen Effekt, umfassend die folgenden Vorgänge:

   - Bereitstellen eines Systems **(100, 100', 100'')** mit den Merkmalen nach Anspruch **12;**
   - Aufstellen des Systems **(100, 100', 100'')** auf einem im Wesentlichen nicht ebenen Boden, Anordnen der mindestens zwei Ausrichtungsquerstäbe **(5),** so dass ihre Längsdrehachsen **(ARP1, ARP2)** zwischen sich einen Winkel (β, β**1**, β**2**) bilden, der gleich oder größer ist als **0,5** Grad.

14. Verfahren nach Anspruch **13,** umfassend die folgenden Vorgänge:

   - Bereitstellen eines Systems **(100, 100', 100'')** mit den Merkmalen nach Anspruch **12** und versehen mit mindestens drei Ausrichtungsquerstäben (**5**);
   - Aufstellen des Systems **(100, 100', 100'')** auf einem im Wesentlichen nicht ebenen Boden, Anordnen der mindestens drei Ausrichtungsquerstäbe (**5**), so dass ihre Längsdrehachsen **(ARP1, ARP2)** im Wesentlichen eine unterbrochene Linie bilden.

15. Verfahren nach Anspruch **13** oder **14,** wobei das System auf einem im Wesentlichen nicht ebenen Boden installiert wird, Anordnen der mindestens zwei Ausrichtungsquerstäbe (**5**), so dass ihre Längsdrehachsen **(ARP1, ARP2)** zwischen sich einen Winkel **(β, β1, β2)** zwischen **0°** und **45°** Grad bilden.

**Revendications**

1. Réducteur **(10, 10', 10", 10$^{III}$, 10$^{IV}$, 10$^{V}$)** comprenant un logement **(11, 11', 11", 11$^{III}$, 11$^{IV}$, 11$^{V}$),** au moins un élément de couronne dentée **(13, 13', 13", 13$^{III}$, 13$^{IV}$, 13$^{V}$),** une entrée de puissance **(15),** au moins deux prises de force **(17, 17', 17", 17$^{III}$, 17$^{IV}$, 17$^{V}$),** au moins un joint de prises **(19, 19', 19") ;**
   dans lequel :

   - l'élément denté de la couronne **(13, 13', 13", 13$^{III}$, 13$^{IV}$, 13$^{V}$)** forme une denture d'engrenage **(130)** ;
   - l'entrée de puissance **(15) est** configurée pour entraîner l'élément de couronne denté **(13, 13', 13", 13$^{III}$, 13$^{IV}$, 13$^{V}$)** ;
   - l'élément de couronne dentée **(13, 13', 13", 13$^{III}$, 13$^{IV}$, 13$^{V}$)** est configuré pour entraîner les deux prises de force **(17, 17', 17, 17$^{III}$, 17$^{IV}$, 17$^{IV}$), à** tourner sur elles-même autour d'un axe de rotation de couronne **(ARC)** ;
   - chaque prise de force **(17, 17', 17")** comprend une interface rotative configurée pour tourner sur elle-même autour d'un axe de rotation de la prise de force **(ARP1, ARP2)** et pour engager et entraîner un arbre ou un autre élément rotatif entraîné ;
   - l'entrée de puissance **(15)** est configurée pour s'engager dans la denture **(130)** de l'élément de couronne denté **(13, 13', 13", 13$^{III}$, 13$^{IV}$, 13$^{V}$)** entrant en contact avec celle-ci dans au moins un point de contact de la couronne **(PCC)** ;
   - l'au moins une un joint de prise **(19, 19', 19")** permet de faire varier l'orientation dans l'espace d'au moins un axe de rotation de prise **(ARP1, ARP2)** en le faisant tourner par rapport à l'élément de la couronne dentée **(13, 13', 13", 13$^{III}$, 13$^{IV}$, 13$^{V}$)** autour d'un centre de rotation de prise respectif **(CRP1, CRP2)** ; **caractérisés par le fait que** :
   - la distance **(DPC1, DPC2),** selon l'axe de rotation de la couronne **(ARC),** de chaque centre de rotation du prise **(CRP1, CRP2)** du plan de contact de la couronne **(PCCor)** est égal ou inférieur à deux fois le rayon extérieur **(RCext)** de la denture **(130)** de l'élément de la couronne dentée **(13, 13', 13", 13$^{III}$, 13$^{IV}$, 13$^{V}$),** dans lequel le plan de contact de la couronne **(PCCor)** est le plan idéal perpendiculaire à l'axe de rotation de la couronne **(ARC)** et passant par le au moins un point de contact de la couronne **(PCC)** ;
   - l'au moins un joint de **prise (19, 19', 19")** ou chaque joint de **prise (19, 19', 19")** est au moins partiellement contenu dans l'élément de couronne dentée **(13,** 13', **13", 13$^{III}$, 13$^{IV}$, 13$^{V}$).**

2. Réducteur selon la revendication **1,** dans lequel la distance **(DPC1, DPC2)** de chaque centre de rotation de prise **(CRP1, CRP2)** par rapport au plan de contact de la couronne **(PCCor)** est égale ou inférieure à **0,6 fois** le rayon extérieur **(RCext)** de la denture **(130)** de l'élément de couronne denté **(13, 13', 13", 13$^{III}$, 13$^{IV}$, 13$^{V}$).**

3. Réducteur selon la revendication **1** ou **2,** comprenant au moins deux joints de prise **(19, 19', 19").**

4. Réducteur selon une ou plusieurs des revendications précédentes, dans lequel les au moins deux prises de force **(17, 17', 17")** s'étendent à partir de et/ou font saillie à partir de et/ou sont formées sur deux côtés, sensiblement opposés l'un à l'autre ou autrement sensiblement différents l'un de l'autre, du réducteur **(10, 10', 10", 10$^{III}$, 10$^{IV}$, 10$^{V}$).**

5. Réducteur selon une ou plusieurs revendications précédentes, dans lequel l'au moins un joint de prise **(19, 19', 19"),** les au moins deux joints de prise **(19, 19', 19")** ou chaque joint de prise **(19, 19', 19")** permet de faire varier l'orientation dans l'espace d'au moins un axe de rotation du prise **(ARP1, ARP2)** en le faisant tourner par rapport à l'élément de couronne dentée **(13, 13', 13", 13$^{III}$, 13$^{IV}$, 13$^{V}$)** d'un angle **($\alpha$1, $\alpha$2)** dont la valeur absolue est comprise entre **0° et 45°.**

6. Réducteur au moins selon les revendications **3** et **5,** dans lequel les au moins deux joints de prise **(19, 19', 19")** sont configurées pour faire varier l'orientation dans l'espace d'un axe de rotation de prise **(ARP1, ARP2)** en le faisant tourner par rapport à un autre axe de rotation au prise **(ARP2, ARP1)** d'un angle dont la valeur absolue est comprise entre **0° et 90°.**

7. Réducteur selon une ou plusieurs des revendications précédentes, dans lequel l'au moins un joint de prise **(19, 19', 19"),** les au moins deux joints de prise **(19, 19', 19")** ou chaque joint de prise **(19, 19', 19")** dans un état de fonctionnement normal permet de maintenir les au moins deux axes de rotation de prise **(ARP1, ARP2)** sensiblement coaxiaux.

8. Réducteur selon une ou plusieurs des revendications précédentes, dans lequel l'entrée de puissance **(15)** comprend un ou plusieurs des éléments suivants : un arbre rotatif, la vis ou un autre arbre fileté d'un ensemble vis sans fin, un pignon, une bobine ou une autre roue dentée, par exemple avec une denture extérieure.

9. Réducteur selon la revendication **8**, dans lequel l'entrée de puissance **(15)** s'engage avec l'élément de couronne dentée **(13, 13', 13", 13III, 13IV, 13V)** de manière à former un mécanisme à vis sans fin.

10. Réducteur selon l'une ou plusieurs des revendications précédentes, dans lequel au moins une partie ou chaque joint de prise **(19)** comprend un ou plusieurs joints de cardan.

11. Réducteur selon une ou plusieurs des revendications précédentes, dans lequel au moins une partie des joints de prise ou chaque joint de prise **(19)** comprend :

- un siège femelle, comme par exemple la cavité traversante **(171)** passant à travers l'élément de couronne denté **(13)** ;
- un élément mâle tel que, par exemple, l'extrémité de la prise de force **(17)** contenue dans la cavité traversante **(171)** ;

et dans lequel :

- les parois intérieures du siège femelle forment une denture intérieure **(132)** ;
- l'élément mâle **(17)** forme une denture extérieure **(170)** engrenée ou autrement engagée avec la denture intérieure **(132)** de manière à transmettre à cette dernière des couples d'entraînement ou à recevoir d'elle des couples d'entraînement ;
- les dentures intérieure **(132)** et extérieure **(170)** sont telles qu'elles permettent à l'élément mâle de varier son orientation dans l'espace par rapport au siège femelle, d'un angle égal ou supérieur à **0,5** degrés.

12. Système **(100, 100', 100")** de production d'électricité principalement par effet photovoltaïque, comprenant un ou plusieurs suiveurs solaires comprenant chacun :

- au moins deux barres transversales d'orientation **(5)** ;
- une pluralité de panneaux photovoltaïques **(2)** dont certains sont fixés sur l'une des traverses d'orientation **(5)**, dont une partie est fixée sur l'autre des traverses d'orientation **(5)** ;
- au moins un réducteur **(10, 10', 10", 10III, 10IV, 10V)** présentant les caractéristiques selon une ou plusieurs des revendications précédentes, et dont chacune des prises de force **(17, 17', 17")** est fixée à une extrémité de chacune des barres transversales d'orientation **(5)** de manière à supporter ladite extrémité et à pouvoir entraîner les barres transversales d'orientation **(5)** en les faisant tourner sur elles-mêmes autour d'un axe de rotation longitudinal **(ARP1, ARP2)** à une traverse d'orientation respective **(5)** faisant ainsi varier l'orientation dans l'espace des panneaux photovoltaïques respectifs **(2)**.

13. Procédé d'installation d'un système **(100, 100', 100")** de production d'électricité principalement par effet photovoltaïque, comprenant les opérations suivantes :

- fournir un système **(100, 100', 100")** présentant les caractéristiques selon la revendication **12** ;
- installer le système **(100, 100', 100")** sur un sol sensiblement non plat, en disposant les au moins deux barres transversales d'orientation **(5)** de manière à ce que leurs axes de rotation longitudinaux **(ARP1, ARP2)** forment entre eux un angle **(β, β1, β2)** égal ou supérieur à **0,5** degré.

14. Procédé selon la revendication **13**, comprenant les opérations suivantes :

- fournir un système **(100, 100', 100")** présentant les caractéristiques selon la revendication **12** et pourvu d'au moins trois barres transversales d'orientation **(5)** ;
- installer le système **(100, 100', 100")** sur un sol sensiblement non plat, en disposant les au moins trois barres transversales d'orientation **(5)** de manière à ce que leurs axes de rotation longitudinaux **(ARP1, ARP2)** forment sensiblement une ligne brisée.

15. Procédé selon la revendication **13** ou **14**, dans lequel le système est installé sur un sol sensiblement non plat, disposer les au moins deux barres transversales d'orientation **(5)** de manière à ce que leurs axes de rotation longitudinaux **(ARP1, ARP2)** forment entre eux un angle **(β, β1, β2)** compris entre **0°** et **45°** degrés.

Fig. 1

Fig. 2

Fig. 3

EP 4 311 986 B1

Fig. 4

Fig. 5

EP 4 311 986 B1

ARC, CRotCor

$13, 13^{I}, 13^{II}, 13^{III}, 13^{IV}, 13^{V}$

130

RCExt

Fig. 5A

Fig. 6

EP 4 311 986 B1

Fig. 7

EP 4 311 986 B1

Fig. 8

Fig. 9

EP 4 311 986 B1

Fig. 10

Fig. 11

EP 4 311 986 B1

Fig. 12

Fig. 13

Fig. 14

31

Fig. 15

Fig. 16

EP 4 311 986 B1

Fig. 17

EP 4 311 986 B1

Fig. 18

EP 4 311 986 B1

Fig. 19

EP 4 311 986 B1

$10, 10^I, 10^{II}, 10^{III}, 10^{IV}, 10^V$

100

β

$10, 10^I, 10^{II}, 10^{III}, 10^{IV}, 10^V$

T

2

2

5

5

7

Fig. 20

EP 4 311 986 B1

Fig. 21

$10, 10^I, 10^{II}, 10^{III}, 10^{IV}, 10^V$

100'

2

2

2

2

2

2

2

2

2

5

5

7

EP 4 311 986 B1

38

Fig. 22

**Fig. 23**

EP 4 311 986 B1

Fig. 24

Fig. 14A

Fig. 17A

EP 4 311 986 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 1274495 U
- ES 1271451 U
- DE 202016103981 U